# EUROPEAN PATENT APPLICATION

(11) **EP 4 518 058 A1**
(43) Date of publication of application: **05.03.2025**
(21) Application number: 24193283.9
(22) Date of filing: 07.08.2024
(51) Int. Cl.: H02G 1/14, H01R 43/00, H01R 43/02, H02G 15/18

(54) **AUTOMATED METHODS AND APPARATUS FOR INSTALLING SLEEVES ON SHIELDED ELECTRICAL CABLES**

(30) Priority: 01.09.2023 US 202318241756
(71) Applicant: The Boeing Company, Arlington, VA 22202 (US)
(72) Inventor: Duncan, Grace L., Arlington, VA, 22202 (US); Mitchell, Bradley J., Arlington, VA, 22202 (US); Beute, Scott M., Arlington, VA, 22202 (US); Fundenberger, Mary, Arlington, VA, 22202 (US); TerHaar, David J., Arlington, VA, 22202 (US); Barrick, Kevin M., Arlington, VA, 22202 (US); Cudney, Christopher T., Arlington, VA, 22202 (US); Michmerhuizen, Matt, Arlington, VA, 22202 (US)
(74) Representative: Hoffmann Eitle

(57) **Abstract**

An automated apparatus for installing a sleeve on a cable includes a split funnel assembly, a cable feeding mechanism, a robot comprising an end effector and a plurality of robot motors, a sleeve gripper mounted to the end effector, a plurality of heaters, and a computer configured to output commands in accordance with a predetermined computer program. The split funnel assembly includes an actuator and a split funnel comprising a pair of funnel halves which are able to open and close in response to activation of the actuator. Each funnel half comprises a cable guide channel and a funnel extension. While the split funnel is in the funnel closed state, the funnel extensions form a seat for the sleeve and the cable guide channels form a repeatable path for the cable to follow through the funnel. The apparatus further includes a cable centering gripper, a cable clamp assembly, a slug puller assembly, and a ground lead management system.

## Description

### BACKGROUND

This disclosure generally relates to methods and apparatus for processing shielded cable. In particular, this disclosure relates to automated methods and apparatus for installing a sleeve on a cable.

Shielded cables incorporate shielding in an attempt to prevent electromagnetic interference. For example, the conductors may be surrounded by a braided shield made of metal. Because the shield is made of metal, it may also serve as a path to ground. Usually a shielded cable incorporates a ground wire (hereinafter "ground lead") that contacts the shield in an unjacketed portion of the shielded cable. Typically the ground lead is attached to the unjacketed portion using a solder sleeve. Typically the solder sleeve is placed around a portion of a shielded cable having exposed shielding and is then melted in place.

In a known manual process for installing a solder sleeve on a portion of a shielded cable, the shield is trimmed to length prior to sleeve installation. The existing process requires that two score lines be made on the cable jacket, creating two removable segments of the jacket. The first segment is removed, exposing the shield to be trimmed. Once the shield has been trimmed, the solder sleeve is then threaded onto the cable and past the second removable segment. This second segment (often referred to as the "jacket slug") protects the shield from snagging on the various edges that exist inside the solder sleeve. Once the solder sleeve has been threaded onto the cable, the jacket slug is pulled off of the cable, and the solder sleeve is moved back to be centered over the newly exposed shielding.

U.S. Patent No. 11,120,928 discloses an automated process for installing a solder sleeve or a dead end sleeve on a portion of a shielded cable that includes a length of exposed shielding. The automation of the sleeve installation operation enables repeatable and consistent quality across end products that is unachievable with a fully manual process. The automated process proposed in U.S. Patent No. 11,120,928 was designed to pass the cable end with trimmed shield through a solder sleeve with the aid of a funnel. One implementation of a funnel-equipped sleeve installation system resulted in quality inconsistencies in some cable types, and required absolute precision in the positioning of the sleeve part relative to the funnel entrance. This was more difficult when attempting to install solder sleeves out back, as the ground lead-side inner diameter is smaller than the non-ground lead side. As a result, the shield would sometimes snag when trying to feed larger-diameter cables through the solder sleeves.

The inner diameter of a solder sleeve is highly variable down the length of the solder sleeve due to the internal components contained within the sleeve, including the solder ring, ground lead strand, and insulation rings. In addition, the tolerance values of solder sleeves are large, adding even more variability to the interior surface of the sleeves. This variability, in addition to the variability of the interior components, makes it difficult for a cable to pass through a solder sleeve without snagging on the edge of an internal component, thereby causing the cable to buckle when attempting to feed it through the sleeve.

### SUMMARY

The subject matter disclosed in some detail below is directed to automated technology to address the issues identified in the Background section and other issues such as ground lead management after a solder sleeve has been installed. The computer-controlled sleeve installation machine disclosed herein includes respective subsystems which pick up a sleeve and place the sleeve in contact with the funnel extensions of a split funnel while the funnel is closed, feed an end of a cable through the closed funnel from a cable-carrying pallet, remove the jacket slug from the cable end to expose a portion of the shield, retract the cable end to center the exposed shielding inside the sleeve, heat the sleeve, cool the sleeve, and then retract the cable end onto the cable-carrying pallet with the aid of the ground lead management system.

More specifically, the computer-controlled sleeve installation machine includes a specialized split funnel system which has been designed to allow a cable with trimmed shield to pass through a solder sleeve without snagging the unjacketed ends of the wires on the sleeve. The proposed split funnel system is able to fully open and close, while the funnel halves include trough-like features (hereinafter "ground lead clearance slots") for the ground lead to rest in when the split funnel is closed, allowing for proper alignment of the sleeve during the cable feed phase. After the sleeve has been installed on the cable, the split funnel system is then able to actuate open, allowing the cable to fully exit the funnel assembly.

In accordance with a further enhancement, once the cable has passed through the closed funnel and the seated sleeve, a pneumatically-actuated clamp of an integrated slug puller assembly closes over the jacket slug and actuates backwards, pulling the jacket slug off of the cable and exposing a portion of the shield prior to sleeve installation (i.e., heating and then cooling). At this point, the cable is able to retract so that the sleeve is centered over the newly exposed shielding. This enables the sleeve installation machine to preserve the integrity of the shield up until the time when the sleeve is installed around the exposed shielding.

The split funnel system proposed herein is designed so that a cable is able to pass through the closed funnel without an installed sleeve and then exit the sleeve installation machine with an installed sleeve after the split funnel has opened. Each funnel half of the split funnel has a respective extension feature that is designed to form a seat over which an open end of a sleeve may be placed prior to feeding the cable through the closed funnel. When the cable is first fed through the closed funnel, respective guide channels formed in the funnel halves create a repeatable path for the cable to follow through the funnel. Once the heating process has been completed, a set of air nozzles activate to blow cold air over the hot sleeve. This ensures that the insulation rings are fully cooled and hardened in place before the cable is withdrawn from the sleeve installation machine. Once the sleeve has been installed, the split funnel opens, allowing the cable end with installed sleeve to retract back toward the cable-carrying pallet and out of the sleeve installation machine.

The sleeve installation machine also includes a ground lead management system which is configured such that after installation of a solder sleeve having a ground lead that projects rearward (i.e., the solder sleeve has an "out back" orientation), the ground lead will not snag while the cable is being withdrawn from the sleeve installation machine. When the split funnel is closed, the respective angled surfaces of the funnel halves form a groove in the top of the funnel, while respective extension features projecting from the ends of the funnel halves form a seat for one open end of the solder sleeve. In addition, the funnel halves include respective ground lead clearance slots for the ground lead to rest in when the split funnel is closed. Thus, the ground lead is able to rest on the groove and between the slots while the solder sleeve is being installed in the "out back" orientation. These features allow the sleeve to maintain an inline position with the seat formed by the mutually contacting extension features of the closed funnel. Additionally, a ground lead pusher is actuated to push the ground lead down into the open funnel once the cable has completed processing, ensuring that the ground lead is able to pass out of the apparatus without snagging.

As used herein, the term "tip of a cable" means a portion of a cable exposed by cutting the cable in a cross-sectional plane. As used herein, the term "end of a cable" means a section of cable having a tip and a length of cable extending from the tip. For example, removal of a length of the jacket of a cable that extends to the cable tip creates an unjacketed end of the cable in which the wires are exposed. As used herein, the term "wound cable" means that a portion of a cable is arranged in a series of loops on a pallet. For example, the loops of a wound cable may be corralled by an arc-shaped wall of the pallet that subtends a central angle of 270° or more. As used herein, the term "belt" means an endless belt.

Although various embodiments of systems, methods and apparatus for installing sleeve parts on cables will be described in some detail below, one or more of those embodiments may be characterized by one or more of the following aspects.

One aspect of the subject matter disclosed in detail below is an apparatus for placing a sleeve on a cable, the apparatus comprising: a split funnel assembly comprising: a first actuator comprising first and second guide carriages which translate from funnel open positions to funnel closed positions in response to a close funnel command; and a split funnel comprising a first funnel half mounted to the first guide carriage and a second funnel half mounted to the second guide carriage, wherein the first funnel half comprises a first cable guide channel and a first funnel extension and the second funnel half comprises a second cable guide channel and a second funnel extension, and wherein the split funnel is in a funnel closed state while the first and second guide carriages are in the funnel closed positions; a cable feeding mechanism configured to feed the cable in response to a feed cable command, wherein the cable feeding mechanism is aligned to feed the cable between the first and second funnel halves while the split funnel is closed; a robot comprising an end effector and a plurality of robot motors, wherein the robot is configured to move the end effector in accordance with robot motor control commands; a sleeve gripper mounted to the end effector, wherein the sleeve gripper is configured to grip the sleeve in response to a grip sleeve command; and a computer configured to output the close funnel command, the grip sleeve command, robot motor control commands that seat the sleeve on the first and second funnel extensions while the split funnel is in the funnel closed state, and the feed cable command in accordance with a predetermined computer program, wherein while the split funnel is in the funnel closed state, the first and second funnel extensions form a seat for the sleeve and the first and second cable guide channels form a repeatable path for the cable to follow through the funnel. In addition, the funnel halves include respective ground lead clearance slots for the ground lead to rest in when the split funnel is closed.

Another aspect of the subject matter disclosed in detail below is an apparatus for installing a sleeve on a cable, the apparatus comprising: a split funnel assembly comprising: a first actuator comprising first and second guide carriages which translate from funnel open positions to funnel closed positions in response to a close funnel command and translate from funnel closed positions to funnel open positions in response to an open funnel command; and a split funnel comprising a first funnel half mounted to the first guide carriage and a second funnel half mounted to the second guide carriage, wherein the first funnel half comprises a first cable guide channel and a first funnel extension and the second funnel half comprises a second cable guide channel and a second funnel extension, and wherein the split funnel is in a funnel closed state while the first and second guide carriages are in the funnel closed positions and in a funnel open state while the first and second guide carriages are in the funnel open positions; a cable feeding mechanism configured to feed the cable in response to a feed cable command and to retract the cable and sleeve in response to a retract cable and sleeve command, wherein the cable feeding mechanism is aligned to feed the cable between the first and second funnel halves while the split funnel is closed; a robot comprising an end effector and a plurality of robot motors, wherein the robot is configured to move the end effector in accordance with robot motor control commands; a sleeve gripper mounted to the end effector, wherein the sleeve gripper is configured to grip the sleeve in response to a grip sleeve command and to release the sleeve in response to an release sleeve command; a plurality of heaters configured to heat the sleeve in response to a heat sleeve command while the sleeve is positioned in the heating zone; and a computer configured to output the close funnel command, the grip sleeve command, robot motor control commands that seat the sleeve on the first and second funnel extensions, the feed cable command, the release sleeve command, the heat sleeve command, the open funnel command, and the retract cable and sleeve command in accordance with a predetermined computer program. While the split funnel is in the funnel closed state, the first and second funnel extensions form a seat for the sleeve and the first and second cable guide channels form a repeatable path for the cable to follow through the funnel. In addition, the funnel halves include respective ground lead clearance slots for the ground lead to rest in when the split funnel is closed.

A further aspect of the subject matter disclosed in detail below is a computer-implemented method for placing a sleeve on a cable, the method comprising automated operations performed by an automated workstation, wherein the automated operations comprise: closing a split funnel that comprises first and second funnel halves; picking up a sleeve using a sleeve gripper carried by a robot; placing an open end of the sleeve onto first and second funnel extensions projecting forward from the first and second funnel halves respectively of the closed split funnel; feeding an end of the cable through the split funnel and sleeve; removing a jacket slug from the end of the cable to expose shielding of the cable; retracting the cable until the exposed shielding is centered within the sleeve seated on the first and second funnel extensions; retracting the split funnel away from the cable centering gripper; releasing the sleeve from the sleeve gripper; moving the sleeve gripper away from the sleeve; and activating heaters to heat the sleeve. After heating, the following automated operations occur: cooling the hot sleeve with cold air; extending a ground lead pusher downward and into contact with the ground lead; opening the split funnel; and retracting the cable with sleeve onto a pallet.

Other aspects of systems, methods and apparatus for installing sleeve parts on cables are disclosed below.

### BRIEF DESCRIPTION OF THE DRAWINGS

The features, functions, and advantages discussed in the preceding section may be achieved independently in various embodiments or may be combined in yet other embodiments. Various embodiments will be hereinafter described with reference to drawings for the purpose of illustrating the above-described and other aspects. None of the diagrams briefly described in this section are drawn to scale.
FIG. 1 is a diagram representing and identifying components of an automated system for performing respective operations on an end of a cable at a plurality of cable processing modules.
FIG. 2 is a diagram representing a top view of an end of a cable being pushed forward by a pair of belts circulating around respective pairs of pulleys of a dual-belt cable feed mechanism.
FIG. 3 is a diagram representing a three-dimensional view of an apparatus comprising a pallet configured for holding a wound portion of a cable and an on-pallet dual-belt cable feed mechanism that receives the end of the cable.
FIG. 4A is a diagram depicting an automated system comprising a nut driver apparatus installed at a workstation and a cable feeding apparatus which has arrived at a position adjacent to the workstation in a state wherein a nut driver apparatus is disengaged from the cable feeding apparatus.
FIG. 4B is a diagram depicting the automated system shown in FIG. 4A in a state wherein the nut driver apparatus is engaged with the cable feeding apparatus.
FIG. 5 is a block diagram identifying some components of a cable feeding system in accordance with the embodiment depicted in FIG. 4A.
FIG. 6 is a diagram representing a side view of a portion of a cable having an unjacketed end with an exposed shield that has been trimmed.
FIG. 7A is a diagram representing a side view of the solder sleeve having a pre-installed ground lead.
FIG. 7B is a diagram representing a side view of the solder sleeve depicted in FIG. 7A when overlying a portion of the cable that includes exposed shielding.
FIG. 7C is a diagram representing a side view of the solder sleeve depicted in FIG. 7A when installed by melting on the portion of the cable that includes exposed shielding.
FIGS. 8A and 8B are diagrams representing a side view of a portion of a sleeve-cable assembly having an "out front" solder sleeve before (FIG. 8A) and after (FIG. 8B) melting.
FIGS. 9A and 9B are diagrams representing a side view of a portion of a sleeve-cable assembly having an "out back" solder sleeve before (FIG. 9A) and after (FIG. 9B) melting.
FIG. 10 is a diagram representing a three-dimensional view of some components of a sleeve installation machine in accordance with one embodiment.
FIG. 11 is a diagram representing a magnified three-dimensional view of some of the components of the sleeve installation machine depicted in FIG. 10.
FIG. 12 is a diagram representing a three-dimensional view of the robot that carries a sleeve gripper under the control of a computer (not shown in FIG. 12).
FIG. 13 is a diagram representing a three-dimensional view of a funnel shuttle which is included in the sleeve installation machine depicted in FIG. 10.
FIG. 14A is a diagram representing a three-dimensional view of a subsystem comprising a split funnel assembly mounted to a pneumatic actuator which is configured to extend or retract the split funnel assembly in response to a control signal from a computer (not shown in FIG. 14A).
FIG. 14B is a diagram representing a top view of a closed split funnel in accordance with one embodiment.
FIG. 15 is a diagram representing an exploded view of the components of the subsystem depicted in FIG. 14A.
FIG. 16 is a block diagram identifying some components of a pneumatic actuator for a gripper in accordance with one embodiment.
FIG. 17 is a block diagram identifying some components of a pneumatic actuator for a linear slide in accordance with one embodiment.
FIGS. 18A and 18B are diagrams representing three-dimensional views from different viewpoints of one funnel half of the split funnel depicted in FIG. 14A.
FIGS. 18C through 18F are diagrams representing side, end, top, and bottom views of the funnel half depicted in FIGS. 18A and 18B.
FIGS. 18G and 18H are diagrams representing top and side views respectively a funnel half that is configured with a ground lead clearance slot to provide clearance for a ground lead.
FIG. 19 is a diagram representing a three-dimensional view of the automated apparatus for centering and clamping a cable and then removing the jacket slug depicted in FIG. 10.
FIGS. 20A and 20B are diagrams representing respective front views of a cable centering gripper partially depicted in FIG. 19. FIG 20A shows the cable centering gripper in an open state; FIG 20B shows the cable centering gripper in a partially closed state wherein a cable has been centered.
FIGS. 21A and 21B are diagrams representing three-dimensional views from different viewpoints of a cable clamp assembly which is included in the slug puller assembly depicted in FIG. 19.
FIG. 22 is a diagram representing a three-dimensional view of some components of the cable clamp assembly depicted in FIG. 21A and 21B.
FIG. 23 is a diagram representing a side view of a lever which is included in the cable clamp assembly partially depicted in FIG. 22.
FIGS. 24A and 24B are diagrams representing three-dimensional views of some components of a slug gripper which is included in the slug puller assembly depicted in FIG. 19. FIG 24A shows the slug gripper in a closed state; FIG 24B shows the slug gripper in an open state.
FIG. 25 is a diagram representing a three-dimensional view of the heater shuttle and associated components which are included in the sleeve installation machine depicted in FIG. 10.
FIG. 26 is a diagram representing a side view of the emitter assembly which is depicted in FIG. 25. The wave-like arrows indicate thermal radiation produced when the emitters are activated.
FIG. 27 is a diagram representing a side view of the ground lead management system and funnel shuttle which are included in the sleeve installation machine depicted in FIG. 10.
FIG. 28 is a diagram representing an end view of a portion of a ground lead management system with retracted ground lead pusher and closed split funnel in accordance with one embodiment of the sleeve installation machine depicted in FIG. 10.
FIGS. 29A and 29B form a flowchart identifying steps of an automated method for processing the end of a cable using the sleeve installation machine depicted in FIG. 10.
FIG. 30 is a block diagram identifying some components of a computer-controlled pneumatic system for actuating various components of the sleeve installation machine depicted in FIG. 10 in accordance with one embodiment.
FIG. 31 is a block diagram identifying other computer-controlled components (not shown in FIG. 30) of the sleeve installation machine depicted in FIG. 10.

Reference will hereinafter be made to the drawings in which similar elements in different drawings bear the same reference numerals.

### DETAILED DESCRIPTION

Illustrative embodiments of systems, methods, and apparatus for installing sleeves on shielded cable are described in some detail below. However, not all features of an actual implementation are described in this specification. A person skilled in the art will appreciate that in the development of any such actual embodiment, numerous implementation-specific decisions must be made to achieve the developer's specific goals, such as compliance with system-related and business-related constraints, which will vary from one implementation to another. Moreover, it will be appreciated that such a development effort might be complex and time-consuming, but would nevertheless be a routine undertaking for those of ordinary skill in the art having the benefit of this disclosure.

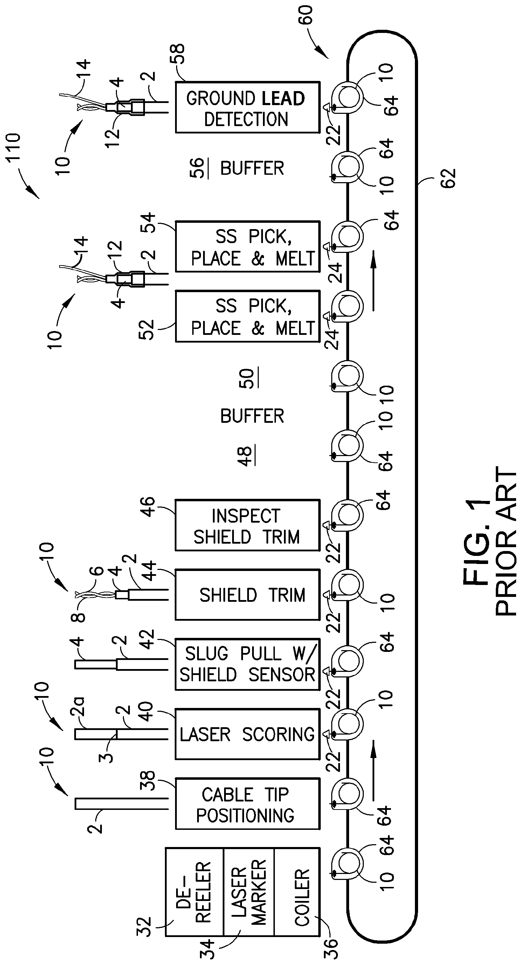

For the purpose of illustration, various embodiments of automated apparatus for installing a sleeve on a cable at a workstation will now be described. In accordance with one embodiment, the automated apparatus is a sleeve installation machine which is mounted on a workbench situated adjacent an automated cable delivery system. The cable-delivery system includes a cable-carrying pallet that travels along a track and is equipped with a motor-driven cable feed mechanism that feeds the end of the cable into the sleeve installation machine. In particular, the automated cable processing system disclosed in U.S. Patent No. 11,120,928 may be modified to include the sleeve installation machine proposed herein. To facilitate understanding of such a system modification, the unmodified automated cable processing system will now be described with reference to FIG. 1.

FIG. 1 is a diagram representing and identifying components of a system 110 for performing respective operations on an end of a cable 10. The system 110 includes a cable delivery system 60. For example, the cable delivery system 60 may take the form of a conveyor system with locating modules (not shown in FIG. 1). Locating modules are components for positioning pallets in preparation for performance of an automated operation. In accordance with the embodiment depicted in FIG. 1, the cable delivery system 60 includes a conveyor track 62 in the form of an endless belt or chain. The entire conveyor track 62 is continuously moving. In alternative embodiments, the cable delivery system 60 is not endless, in which case pallets 64 arriving at the end of a linear conveyor track may be transported to the starting point by other means. In accordance with alternative embodiments, the cable delivery system 60 may be a gantry robot or a robotic arm.

As seen in FIG. 1, the cable delivery system 60 includes multiple pallets 64 that travel on the conveyor track 62, each pallet 64 carrying a respective coil of cable 10. The system 110 depicted in FIG. 1 further includes a multiplicity of automated workstations situated adjacent to and spaced at intervals along the conveyor track 62. Each workstation is equipped with hardware that performs a respective specific operation in a sequence of operations designed to produce a shielded cable 10 having a solder sleeve 12 installed on one end of the cable 10. The locating modules (not shown in FIG. 1) of the system 110 are used to lift each pallet 64 off of the conveyor track 62 when an operation has to be performed at a workstation on the coil carried by that pallet 64 and later place the pallet 64 back on the conveyor track 62 after the operation has been completed so that the pallet 64 can move onto the next workstation.

Each pallet 64 carries a respective coil of cable 10. Pallets 64 move intermittently along the conveyor track 62 in the forward direction indicated by the arrows in FIG. 1, advancing from one automated workstation to the next and then stopping. (This aspect of the cable delivery system 60 will be referred to hereinafter as "pulsing".) A respective bar code reader (not shown in the drawings) is mounted on the side of the conveyor track 62 opposite to each workstation. Each pallet 64 has a bar code printed on a forward side portion thereof. When the bar code reader detects the arrival of a pallet 64, each workstation has a respective controller (e.g., a computer programmed to execute computer numeric control (CNC) commands) that activates the cable processing module of that workstation to begin an automated cable processing operation.

Each shielded cable 10 to be processed is carried on a respective pallet 64 that is conveyed along the conveyor track 62. The pallets 64 pulse down the conveyor track 62 and the end of each shielded cable is inserted into a series of cable processing modules in sequence, each cable processing module including cable processing equipment for performing successive operations of a solder sleeve installation process. In accordance with the embodiment depicted in FIG. 1, the cable processing modules include the following: a de-reeler module 32, a laser marker 34, a coiler module 36, a cable tip positioning module 38, a laser scoring module 40, a jacket slug pulling module 42, a shield trimming module 44, a shield trim inspection module 46, two solder sleeve installation modules 52 and 54 (which perform automated solder sleeve pick, place, and melt functions), and a ground lead detection module 58. In accordance with the proposed implementation depicted in FIG. 1, there are three open positions where cable processing does not occur. These open positions are referred to herein as buffers 48, 50, and 56. The purpose of these buffers will be explained later.

As indicated in FIG. 1 by triangular symbols, some of the workstations include funnels 22 which center the inserted end of the cable 10 in the cable processing equipment at the respective workstation. Other workstations, such as the workstation where the cable tip positioning module 38 is located, do not have a funnel. The workstations where the two solder sleeve installation modules 52 and 54 are located have open-top or split funnels 24, which also guide the end of the cable 10, but differ in structure from the funnels 22 in that the cable may be lifted vertically out of the open split funnel 24 upon completion of the solder sleeve melting operation.

The respective cable processing modules identified in FIG. 1 will be described briefly in the order in which the respective cable processing operations are performed on one cable. The starting material is a continuous length of multiconductor shielded cable of a particular type wound on a reel. The de-reeler module 32 de-reels the continuous length of cable and then cuts the cable to a specified length, which length of cable will be referred to hereinafter as "cable 10." For each length of cable 10, the laser marker 34 laser marks the jacket 2 of the cable 10 with pertinent information (bundle number, wire number, gauge). The coiler module 36 then coils the cable 10. The coil of cable 10 is then taken off of the coiler and placed on a pallet 64. The pallet 64 is then transferred from the coiler module 36 to the cable tip positioning module 38.

The cable tip positioning module 38 serves to initially position the tip of the cable 10 at a preset cable tip position prior to the cable 10 continuing through the system 110. The preset cable tip position is selected to prevent the cable end from being too long as it travels along the conveyor track (hitting other objects within the system, being crushed or otherwise damaged, etc.). The pallet 64 then moves to the laser scoring module 40. The laser scoring module 40 lightly scores the jacket 2 of the cable 10 along a score line 3 which extends circumferentially in a plane that intersects an annular region of the jacket 2. The presence of the score line 3 prepares the applicable segment of jacket 2 (hereinafter "the jacket slug 2a") to be removed by the jacket slug pulling module 42. The jacket slug pulling module 42 removes the jacket slug 2a to reveal the shield 4 in the unjacketed portion of the cable 10. Next, the pallet 64 moves to the shield trimming module 44, which trims off a portion of the exposed portion of the shield 4 to reveal respective portions of the wires 6 and 8 of the cable 10. Then the shield trim inspection module 46 performs a quality check of the trimmed shield using a vision inspection system. The pallet 64 then moves to one of two solder sleeve installation modules 52 and 54, which are configured to install a solder sleeve 12 with a ground lead 14 onto the cable 10 using automated picking, placing, and melting operations. Two cables 10 may have solder sleeves installed concurrently using the two solder sleeve installation modules 52 and 54. Next, the pallet 64 moves to ground lead detection module 58, which detects the ground lead 14 of the solder sleeve 12.

As seen in FIG. 1, the cable delivery system 60 includes multiple pallets 64 that travel on the conveyor track 62, each pallet 64 carrying a respective coil of cable 10. The pallet 64 is equipped with a cable feed mechanism (not shown in FIG. 1) designed to push and pull cables through a cable-guiding funnel which centers the cable for insertion into the cable processing equipment. Additionally, the system is able to define the amount (length) of cable that is fed into the equipment, depending on the cable that is to be processed and its related requirements. A method and an apparatus for tracking the position of the moving tip of the cable by detecting the moment when the moving tip arrives at a scanning plane of a photoelectric sensor situated at a known location may be found in U.S. Patent No. 11,120,928. Once the photoelectric sensor is triggered, a rotation encoder will begin to output pulses indicating increments of rotation by a motor shaft. This provides a way to track the inserted length of the cable in real time, and subsequently cause the motor to stop once the correct length of cable has been fed into the cable processing equipment.

This disclosure proposes that the configuration of the sleeve pick, place and melt module in the system 110 depicted in FIG. 1 be modified by the inclusion of the following subsystems: a retractable split funnel assembly, a cable centering gripper, a cable clamp assembly, a slug puller assembly, and a ground lead management system. For the purpose of illustration, one proposed implementation of a computer-controlled sleeve installation machine will now be described. The sleeve installation machine disclosed herein includes respective subsystems which pick up a sleeve and place the sleeve in contact with the funnel extensions of a split funnel while the funnel is closed, feed an end of a cable through the closed funnel by means of a cable feed mechanism mounted to a cable-carrying pallet, remove the jacket slug from the cable end to expose a portion of the shield, retract the cable end using the cable feed mechanism to center the exposed shielding inside the solder sleeve, heat the solder sleeve on the portion of the cable with exposed shielding, cool the hot solder sleeve, and then retract the cable and sleeve assembly onto the cable-carrying pallet with the aid of the ground lead management system.

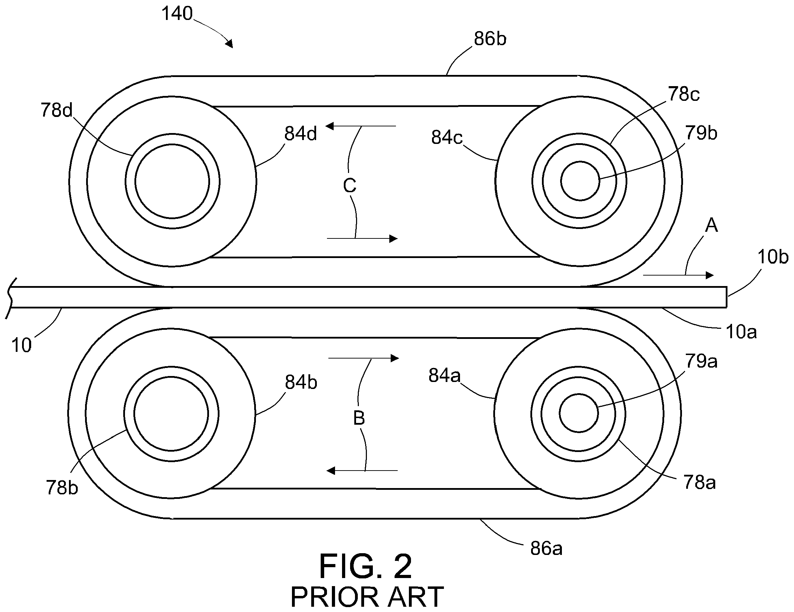

In accordance with one embodiment, the cable delivery system 60 includes a pallet 64 for carrying a length of wound cable 10, an on-pallet dual-belt cable feed mechanism 140 configured for linear feeding of the cable end into a sleeve installation machine, and an off-pallet motor (situated at the sleeve installation machine) operatively coupled for driving circulation of the belts to enable cable insertion/withdrawal. Such a cable delivery system (disclosed in U.S. Patent Application Serial No. 18/115,477 filed on February 28, 2023) will be described hereinafter in some detail with reference to FIGS. 2, 3, 4A, 4B, and 5. The cable 10 must be manually placed on the pallet 64 and the leading end of the cable 10 must be manually placed into the dual-belt drive mechanism 140 in order for the machine to locate the end of the cable 10 once the operator presses the start button.

FIG. 2 is a diagram representing a top view of a cable end 10a of a cable 10 being pushed forward by a pair of belts 86a/86b (hereinafter "first belt 86a" and "second belt 86b") of a dual-belt cable feed mechanism 140. (The cable end 10a includes a cable tip 10b, which is detected by a laser sensor to determine the cable position during the cable feeding process.) The first belt 86a passes around a first pulley 84a and a second pulley 84b; the second belt 86b passes around a third pulley 84c and a fourth pulley 84d. The first through fourth pulleys 84a-84d are fixedly mounted on respective pulley shafts 78a-78d. The pulley shafts 78a-78d are journaled within respective blocks by bearing assemblies (not shown in FIG. 2) in a well-known manner. Those blocks in turn are incorporated in a pallet (not shown in FIG. 2). The first and second belts are arranged to contact opposing sides of a portion of the cable 10 disposed therebetween.

The cable end 10a of cable 10 is shown in FIG. 2 being pushed in the direction of arrow A as the first belt 86a circulates in the direction indicated by arrows B and the second belt 86b circulates in the direction indicated by arrows C. The first belt 86a circulates in response to rotation of a drive gear (not shown in FIG. 2) which is mounted to a first gear shaft 79a. The drive gear comprises a multiplicity of teeth. The first gear shaft 79a is coaxial with and connected to the first pulley shaft 78a. The drive gear is driven to rotate by an input shaft (not shown in FIG. 2) which is coaxial with and connected to the first gear shaft 79a. Thus, the first gear shaft 79a and the first pulley shaft 78a are rotatable in tandem relative to the pallet when the input shaft is rotated. Circulation of the first belt 86a causes the second pulley shaft 78b to rotate.

Similarly, the second belt 86b circulates in response to rotation of an idler gear (not shown in FIG. 2) which is mounted to a second gear shaft 79b. The idler gear comprises a multiplicity of teeth. Some of the teeth of the idler gear are meshed with some of the teeth of the drive gear, so that the idler gear will be driven to rotate by a rotating drive gear. The second gear shaft 79b is coaxial with and connected to the third pulley shaft 78c, so that the second gear shaft 79b and the third pulley shaft 78c rotate in tandem relative to the pallet when the idler gear is driven to rotate. Circulation of the second belt 86b causes the fourth pulley shaft 78d to rotate.

In summary, the first and second belts 86a/86b circulate concurrently and in opposite directions during rotation of an input shaft not shown in FIG. 2. When a cable end 10a is disposed between first and second belts 86a/86b which are arranged to exert sufficient frictional force to move the cable 10, the circulating belts are able to push or pull the cable end 10a toward or away from a funnel 22 disposed in front of the cable processing equipment. Optionally, sufficient frictional force may be assured by including one or more pairs of pressure or contact rollers arranged to press the mutually confronting portions of the belts against the intervening cable. The pressure or contact rollers may be fixedly mounted on laterally movable shafts which are journaled in spring-loaded blocks.

In accordance with one proposed implementation, the first through fourth pulleys 84a-84d are toothed pulleys and the first and second belts 86a/86b are toothed belts. Respective portions of each toothed belt are passed (wrapped) around a portion of respective toothed pulleys. The toothed pulley has a multiplicity of teeth projecting outward from an outer periphery thereof. The toothed belt has a multiplicity of teeth which engage the teeth of the toothed pulley in a well-known manner. As a result, each toothed belt circulates in conjunction with rotation of the toothed pulleys.

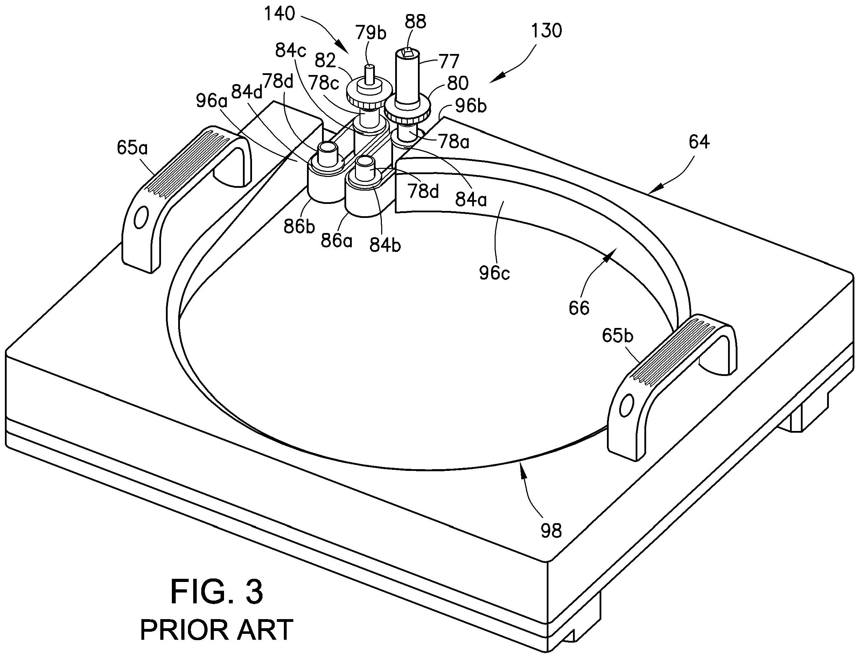

FIG. 3 is a diagram representing a three-dimensional view of a cable-feeding apparatus 130 that includes a pallet 64 configured to carry a length of wound cable (not shown in FIG. 3) and a dual-belt cable feed mechanism 140 carried by the pallet 64. The pallet 64 comprises a corral 66 that defines a recess 98 configured to support and contain the length of wound cable. To facilitate manipulation of the pallet 64 by a human operator, a pair of handles 65a/65b are attached to the pallet 64 outside and on opposite sides of the recess 98. The corral 66 comprises a circular wall 96c having a discontinuity and first and second planar walls 96a/96b which extend from the discontinuity. The first and second belts 86a/86b are disposed side-by-side in a portion of the recess 98 which is partly bounded by first and second planar walls 96a and 96b of corral 66.

As seen in FIG. 3, the dual-belt cable feed mechanism 140 includes first through fourth pulley shafts 78a-78d which are rotatably coupled to the pallet 64. The axes of rotation of first through fourth pulley shafts 78a-78d are parallel to each and perpendicular to the plane of the pallet surface on which the wound cable is placed. The first through fourth pulleys 84a-84d are respectively fixedly mounted to the first through fourth pulley shafts 78a-78d.

The dual-belt cable feed mechanism 140 depicted in FIG. 3 further includes a first gear shaft 79a and an input shaft 77. The input shaft 77, first gear shaft 79a, and first pulley shaft 78a are fixedly coupled in series (with the first gear shaft 79a connecting first pulley shaft 78a to input shaft 77) to form a first shaft assembly that rotates around a first common axis of rotation. A drive gear 80 is fixedly mounted to first gear shaft 79a. The first gear shaft 79a, drive gear 80, first pulley shaft 78a, and first pulley 84a all rotate in unison when the input shaft 77 is rotated. Rotation of first pulley 84a in turn causes the first belt 86a to circulate, which in turn causes the second pulley 84b and the second pulley shaft 78b to rotate concurrently.

The dual-belt cable feed mechanism 140 further includes a second gear shaft 79b which is fixedly coupled to the third pulley shaft 78c to form a second shaft assembly that rotates around a second common axis of rotation (parallel to the first common axis of rotation). An idler gear 82 is fixedly mounted to the second gear shaft 79a. Some teeth of idler gear 82 are meshed with some teeth of drive gear 80. Thus, the second gear shaft 79b, idler gear 82, third pulley shaft 78c, and third pulley 84c all rotate in unison when the drive gear 80 is rotated. Rotation of third pulley 84c in turn causes the second belt 86b to circulate, which in turn causes the fourth pulley 84d and the fourth pulley shaft 78d to rotate concurrently.

The input shaft 77 is configured with a head 88 designed to engage a socket of a nut driver (not shown in FIG. 3). The head 88 projects from an upper end face of the input shaft 77. The socket and head 88 are configured to have interlocking shapes that ensure rotation of the head 88 when the socket is rotated. In one example configuration, the head 88 comprises a solid body having at least one rectangular planar side surface. For example, a hexagonal nut or bolt head has six rectangular planar side surfaces. In another example configuration, the head 88 comprises a solid body having at least one trapezoidal planar side surface, such as a pyramidal body having four trapezoidal planar side surfaces and a square top surface. In a further example configuration, the head 88 comprises a solid body having a multiplicity of splines (e.g., grooves having arc-shaped or V-shaped cross-sectional profiles).

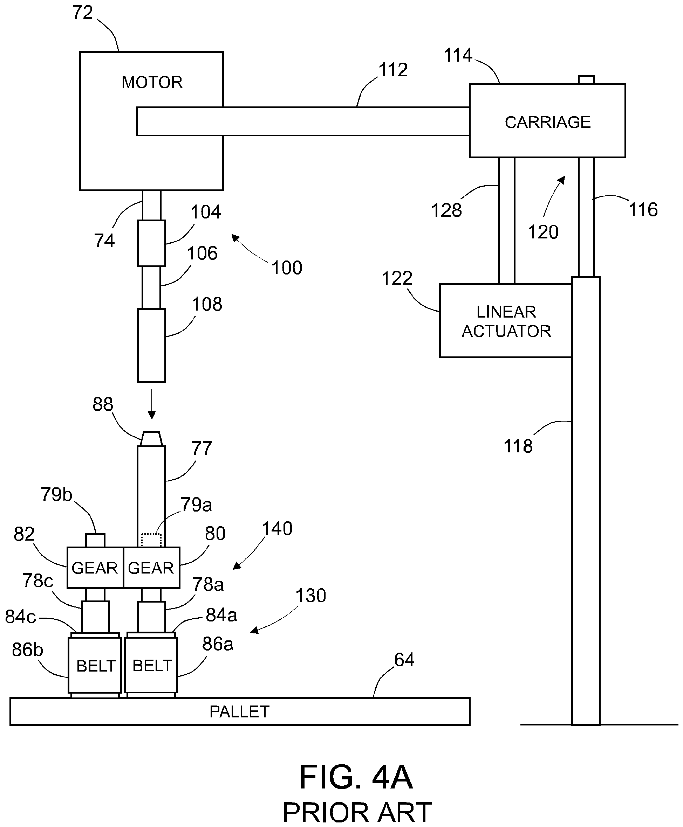

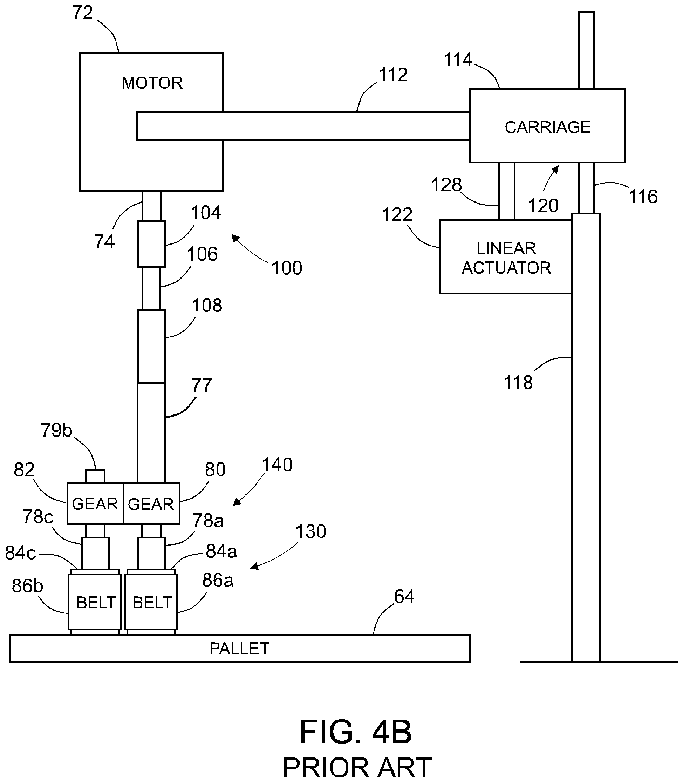

As will be described below with reference to FIGS. 4A and 4B, the nut driver is able to drive rotation of the input shaft 77 when the socket 108 is interlocked with the head 88, thereby causing the input shaft 77 to rotate. The first and second belts 86a/86b circulate concurrently in opposite directions when input shaft 77 is driven to rotate. The first belt 86a circulates around and contacts the first and second pulleys 84a/84b. The second belt 86b circulates around and contacts the third and fourth pulleys 84c/84d. The first and second belts 86a/86b are made of compliant material. The first and second belts 86a/86b are arranged to contact opposing sides of a portion of the cable disposed therebetween with sufficient friction to linearly feed or withdraw the cable as the belts circulate. For example, the end of a cable to be processed may be pushed into a funnel 22 (see FIG. 1) in front of the cable processing equipment in response to the issuance of a feed cable command from a control computer (not shown in FIG. 3).

FIG. 4A is a diagram depicting an automated system comprising a nut driver apparatus 100 installed at a workstation and a cable-feeding apparatus 130 which has arrived at a position adjacent to the workstation. The nut driver apparatus 100 includes a motor-driven drive shaft 106 that is vertically displaceable relative to a stanchion 118 installed at the workstation. A socket 108 is fixedly coupled to a lower end of the drive shaft 106. In the scenario depicted in FIG. 4A, the motor-driven drive shaft 106 is disposed at an upper vertical position at a first elevation such that socket 108 is separated (disengaged) from a head 88 which is fixedly coupled to or integrally formed with the input shaft 77 of the cable-feeding apparatus 130.

In accordance with the embodiment depicted in FIG. 4A, the nut driver apparatus 100 further includes a bearing assembly 120 comprising a guide 116 which is oriented vertically and a carriage 114 which is translatably coupled to the guide 116 for vertical displacement. The lower end of guide 116 is attached to the upper end of stanchion 118. The nut driver apparatus 100 further includes a linear actuator 122 comprising an elongated machine element 128 which is mechanically coupled to drive vertical displacement of carriage 114. The vertically displaceable platform of nut driver apparatus 100 further includes an arm 112 having one (proximal) end affixed to the carriage 114. An electric motor 102 is mounted to the other (distal) end of arm 112. The electric motor 102 comprises a motor output shaft 74. The drive shaft 106 is mechanically coupled to the motor output shaft 74 by means of a shaft coupler 104.

Still referring to FIG. 4A, the cable-feeding apparatus 130 comprises a pallet 64 and a dual-belt cable feed mechanism 140 mounted to pallet 64. The dual-belt cable feed mechanism 140 includes all of the components previously described with reference to FIG. 3, including dual belts 86a and 86b, pulleys 84a-84d, and gears 80 and 82.

As previously disclosed, input shaft 77, gear shaft 79a, and first pulley shaft 78a are connected in series to form a first shaft assembly. In an alternative embodiment, drive gear 80 and first pulley 84a (not visible in FIG. 4A, but see FIG. 3) may be mounted to a monolithic shaft. The head 88 may be either attached to or integrally formed with the upper end of input shaft 77. The head 88 is a solid body having a geometric shape configured to engage and interlock with socket 108 of the nut driver apparatus 100. For example, head 88 may comprise a solid body having multiple rectangular planar side surfaces (e.g., a hexagonal head) or multiple trapezoidal planar side surfaces (e.g., a truncated pyramidal head). FIG. 3 shows a head 88 having four trapezoidal planar side surfaces, only one of which is visible. In the alternative, the head 88 may have a splined surface with splines that match projections inside a cavity of the socket 108. In general, the geometric shape of head 88 should match the geometric shape of the cavity of socket 108 to enable the socket 108 to turn the head 88 about the axis of rotation of input shaft 77.

FIG. 4B depicts the automated system in a state wherein the socket 108 of nut driver apparatus 100 is engaged with the head 88 of cable-feeding apparatus 130. In the scenario depicted in FIG. 4B, the head 88 is interlocked with the socket 108 following a downward vertical displacement of carriage 114 by a predetermined distance. More specifically, the arm 112 has been lowered until the socket 108 engages the head 88 of input shaft 77. While the socket 108 is engaged with head 88, the electric motor 102 is activated to drive rotation of socket 108. The drive gear 80, idler gear 82, first pulley 84a, and third pulley 84c convert rotation of the input shaft 77 into concurrent circulation of the first and second belts 86a/86b in opposite directions.

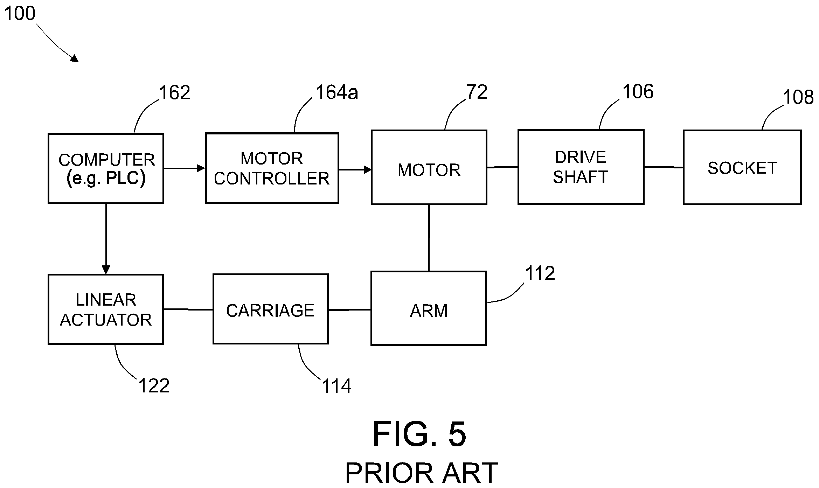

FIG. 5 is a block diagram identifying additional components of the cable feeding system proposed herein. The state of the linear actuator 122 is controlled by a computer 162 that is programmed to coordinate operations at the workstation, including the operations performed by the sleeve installation machine (not identified in FIG. 5). In accordance with one proposed implementation, the computer 162 is a programmable logic controller (PLC).

In particular, a predetermined linear displacement of carriage 114 and arm 112 is produced by activation of the linear actuator 122 in response to a first command from computer 162. The electric motor 102 operates under the control of a motor controller 164a. (As used herein, the term "motor controller" means a device that can coordinate the performance of an electric motor and that includes power electronics devices and a microprocessor to control the states of the power electronic devices.) The motor controller 164a activates electric motor 102 in response to issuance of a second command (subsequent in time to issuance of the first command) by the computer 162. The electric motor 102 then drives rotation of the drive shaft 106 and the socket 108 until computer 162 issues a third command which causes the motor controller 164a to deactivate electric motor 102, thereby terminating the automated cable feeding or withdrawal operation.

Various types of linear actuators may be employed. For example, the cable feeding system may include a pneumatic actuator to vertically displace the carriage 114 downward or upward. This cable feeding system may further include a control valve (e.g., a solenoid valve) that is configured to control the flow of compressed gas from a compressed gas supply to the pneumatic actuator in response to a command received from computer 162. The pneumatic actuator comprises a pneumatic cylinder, a piston inside the pneumatic cylinder, and a piston rod (connected to the piston) which projects forward and out of the pneumatic cylinder. The piston rod is linearly displaceable from a retracted position to an extended position in response to the supply of compressed gas to the pneumatic cylinder, which compressed gas drives the piston forward. The pneumatic actuator may be arranged such that extension of the piston rod causes the carriage 114 to displace downward until the socket 108 on drive shaft 106 engages the head 88 on input shaft 77 as seen in FIG. 4B.

In accordance with an alternative embodiment, the cable feeding system may include a linear electric actuator to vertically displace the carriage 114. In accordance with one proposed implementation, the linear electric actuator comprises a rotary-to-linear motion conversion mechanism (e.g., a rack and pinion mechanism or a lead screw and nut mechanism) that converts rotary motion of an electric motor (not shown in the drawings) into linear displacement of carriage 114. The electric motor is controlled by a motor controller, which in turn receives commands from the computer 162. In the case of a rack and pinion mechanism, the pinion gear is coupled to the output shaft of the electric motor, while the rack is attached to the carriage 114. In the case of a lead screw and nut mechanism, the lead screw is coupled to the output shaft of the electric motor, while the nut is attached to the carriage 114.

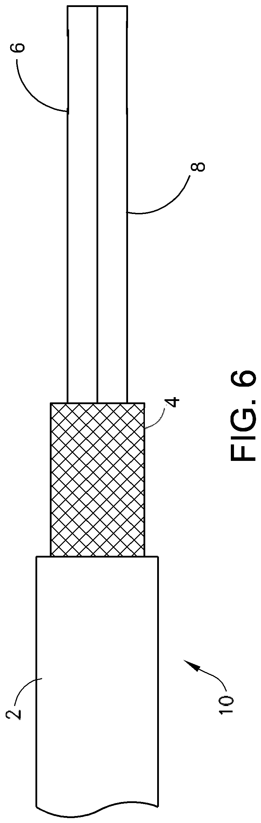

The above-described cable feeding system may be used in conjunction with a sleeve installation machine that is designed to install a solder sleeve or a dead end sleeve on an end portion of a shielded cable that includes a length of exposed shielding. FIG. 6 is a diagram representing a side view of a portion of a cable 10 having an unjacketed end with an exposed shield 4 that has been trimmed. The trimming of the shield 4 in turn exposes the ends of wires 6 and 8 of the cable 10. As described in some detail hereinafter, the sleeve installation machine is configured to install a solder sleeve 12 with a ground lead 14 (shown in FIG. 1) onto a cable 10 using automated picking, placing and melting operations.

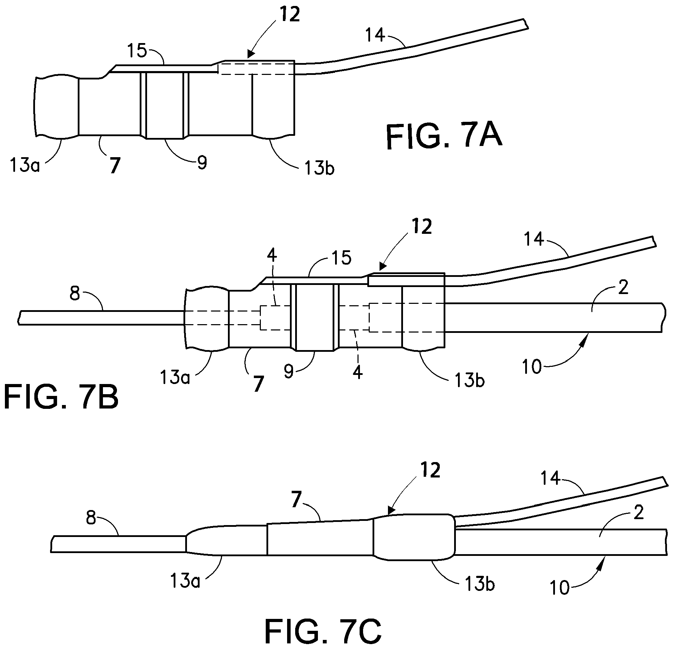

FIG. 7A is a diagram representing a side view of a typical solder sleeve 12 having a pre-installed ground lead 14. The solder sleeve 12 includes a sleeve body 7 made of transparent, heat-shrinkable thermoplastic material. The internal diameter of the sleeve is greater than the outer diameter of the cable being processed. The solder sleeve 12 further includes a central solder ring 9 adhered to the inside of the sleeve body 7 at a central position and a pair of thermoplastic insulation rings 13a and 13b. FIG. 7B is a diagram representing a side view of the solder sleeve 12 depicted in FIG. 7A when placed in a position overlying a portion of a cable 10 having a jacket 2 and an unjacketed portion where the shield 4 is exposed. The exposed shield 4 is surrounded by the central solder ring 9, which when melted and then solidified will form an electrical connection between the shield 4 and the ground lead conductor strand 15. The sleeve body 7 has not yet been melted. FIG. 7C is a diagram representing a side view of the solder sleeve 12 depicted in FIG. 7A after the solder sleeve 12 has been melted on the cable 10.

The sleeve installation machine disclosed herein is capable of installing a solder sleeve having a ground lead disposed in either an "out front" orientation or an "out back" orientation. In the "out front" orientation, the ground lead extends away from the cable; in the "out back" configuration, the ground lead extends back toward the cable.

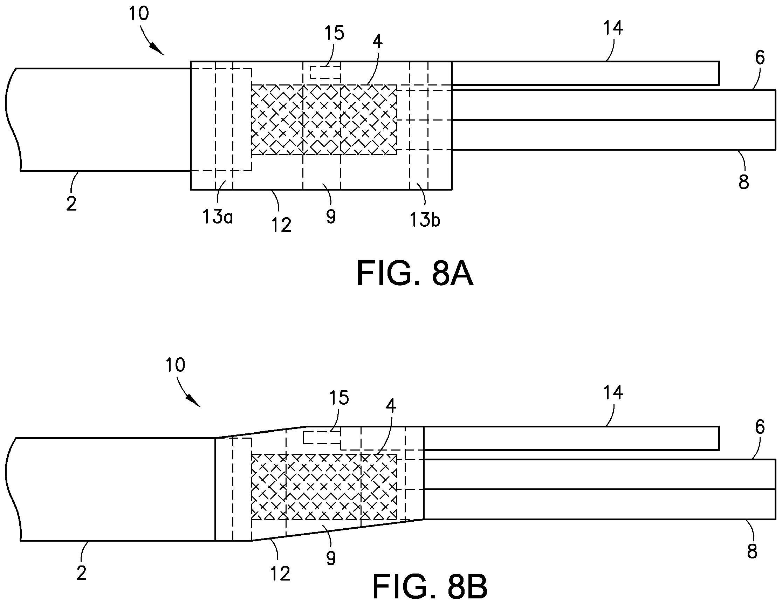

FIGS. 8A and 8B are diagrams representing a side view of a portion of a sleeve-cable assembly having an "out front" solder sleeve 12. The sleeve-cable assembly includes a solder sleeve 12 having a ground lead 14 that extends away from the jacket 2 of cable 10. The solder sleeve 12 is threaded onto the wires 6 and 8 until the solder sleeve 12 is in a position surrounding the exposed shield 4. As seen in FIG. 8A, the "out front" solder sleeve 12 also surrounds an end segment of the jacket 2 and unshielded portions of wires 6 and 8. FIG. 8A shows the sleeve-cable assembly in a state before the "out front" solder sleeve 12 is melted on the cable 10. FIG. 8B shows the sleeve-cable assembly 1a in a state after the "out front" solder sleeve 12 has been melted on the cable 10.

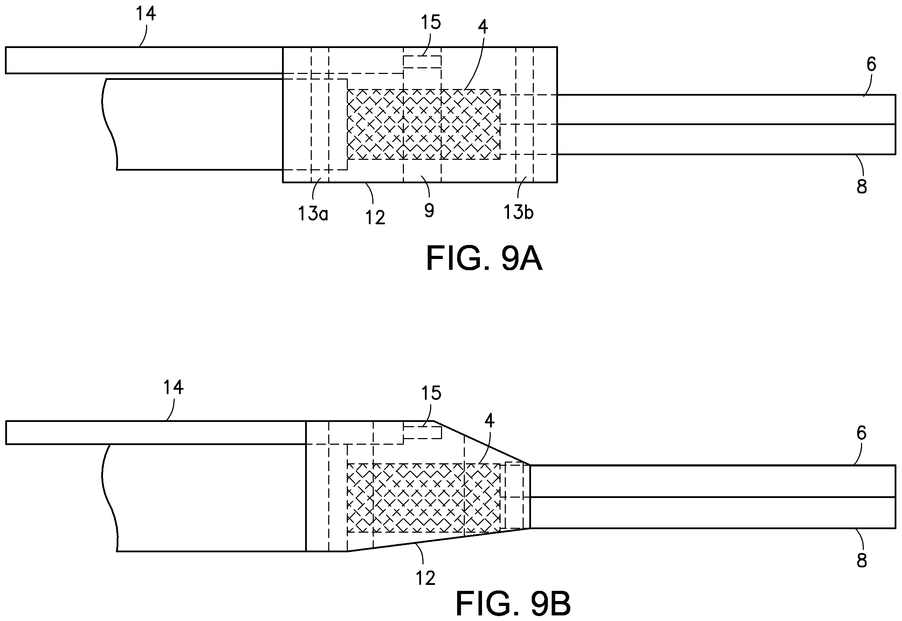

FIGS. 9A and 9B are diagrams representing a side view of a portion of a sleeve-cable assembly having an "out back" solder sleeve 12. The sleeve-cable assembly 1a includes a solder sleeve 12 having a ground lead 14 that extends toward the jacket 2 of cable 10. The solder sleeve 12 is threaded onto the wires 6 and 8 until the solder sleeve 12 is in a position surrounding the exposed shield 4. FIG. 9A shows the sleeve-cable assembly in a state before the "out back" solder sleeve 12 is melted on the cable 10. FIG. 9B shows the sleeve-cable assembly in a state after the "out back" solder sleeve 12 has been melted on the cable 10.

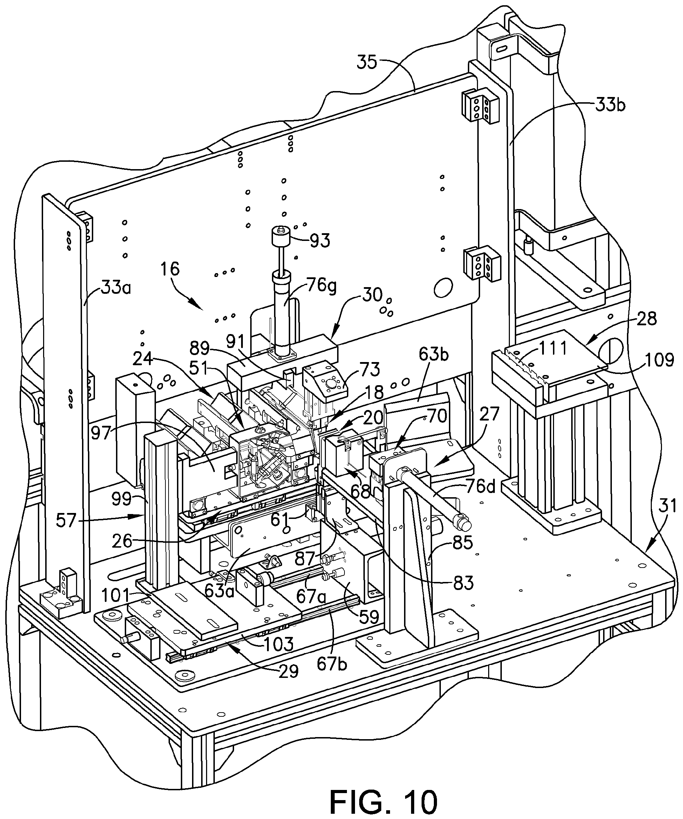

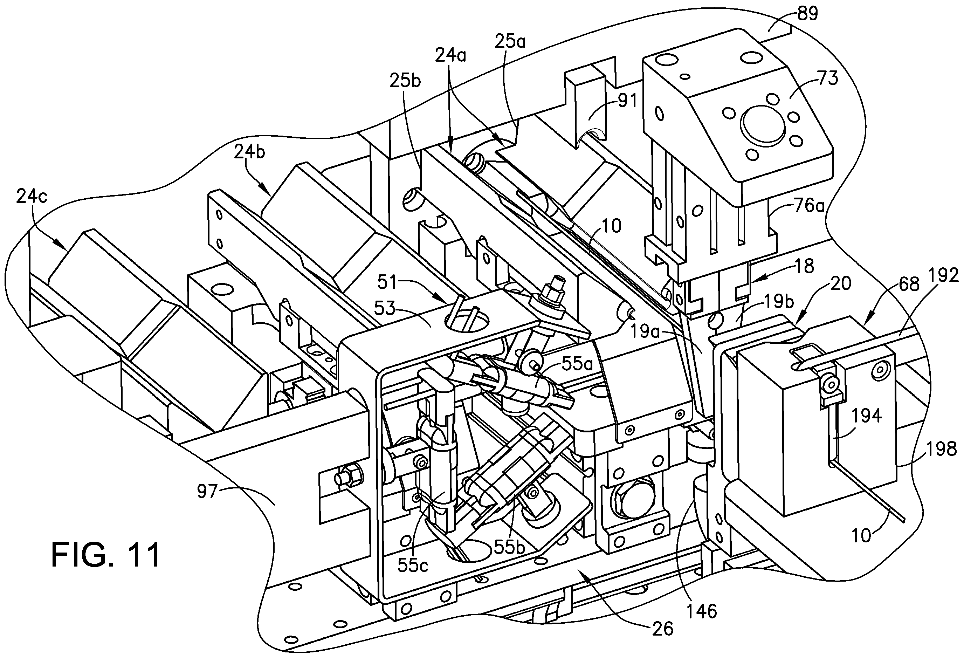

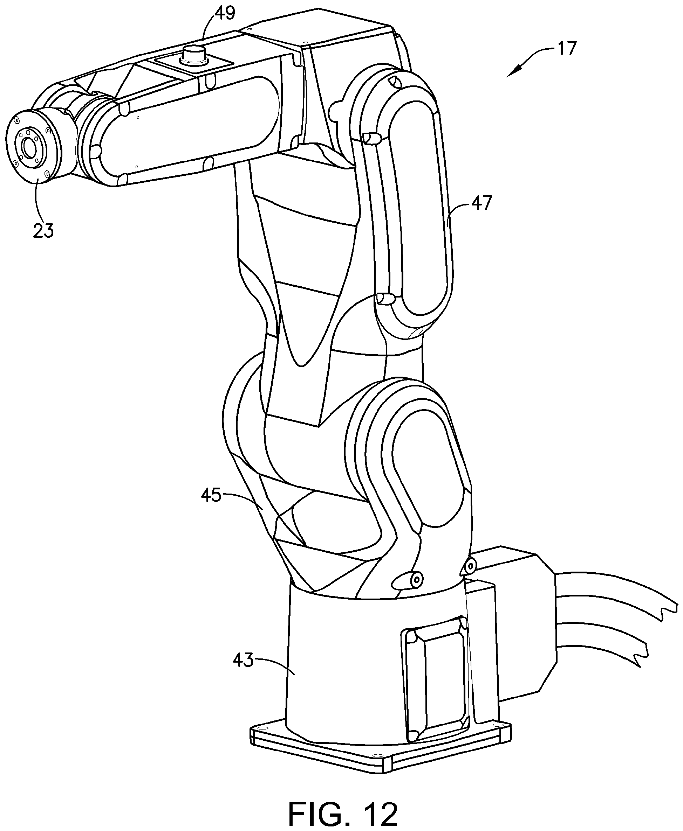

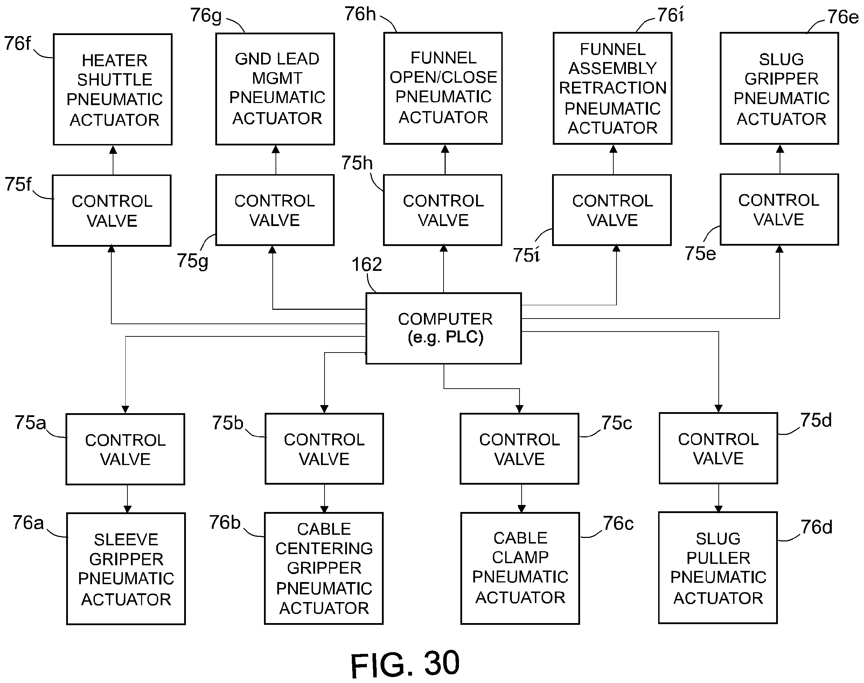

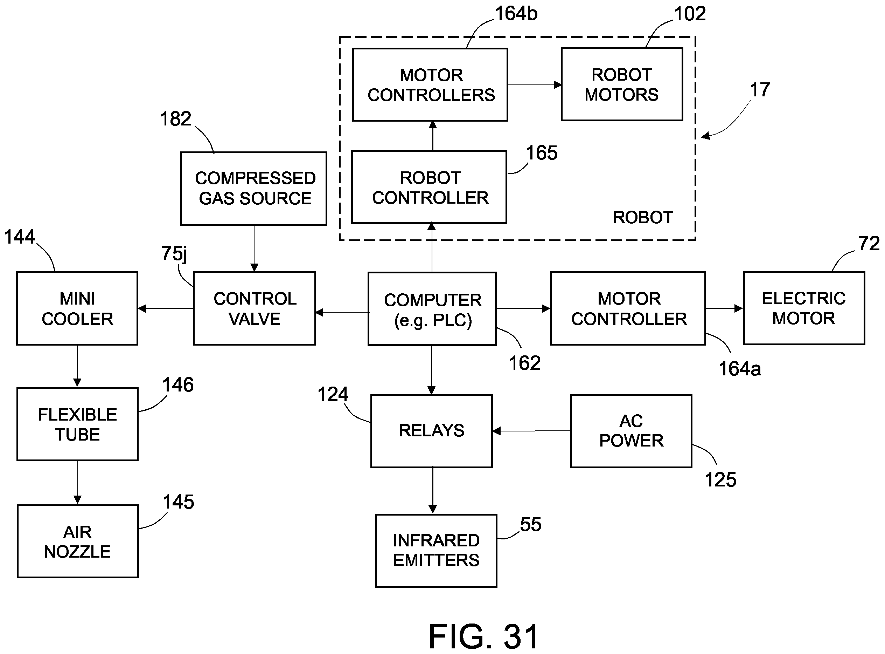

FIG. 10 is a diagram representing a three-dimensional view of some components of a sleeve installation machine 16 in accordance with one embodiment. The sleeve installation machine 16 includes the components depicted in FIG. 10 and also includes the nut driver apparatus 100 depicted in FIGS. 4A and 4B, the robot 17 with end effector 23 seen in FIG. 12; and the computer 162 and associated computer-controlled components indicated in FIGS. 30 and 31. FIG. 11 is a diagram representing a magnified three-dimensional view of some of the components of the sleeve installation machine depicted in FIG. 10. FIG. 11 may be referred to in conjunction with FIG. 10 when the components visible on a magnified scale in FIG. 11 are described below.

As seen in FIG. 10, some components of the sleeve installation machine 16 are mounted on a horizontal top surface of a workbench 31. Other components are mounted to a vertical mounting panel 35. The mounting panel 35 is supported by a pair of panel support boards 33a and 33b which extend vertically upward from the workbench 31. Subsystems which are fastened to the workbench 31 include a sleeve holding fixture 28 and a slug puller assembly 27. Subsystems which travel on rails (which rails are fixedly coupled to the workbench 31) include a funnel shuttle 26 and a heater shuttle 29. The sleeve installation machine 16 further includes a ground lead management system 30 mounted to the rear surface of the mounting panel 35. The nut driver apparatus 100 (which is not visible in FIG. 10) is mounted to the front surface of the mounting panel 35.

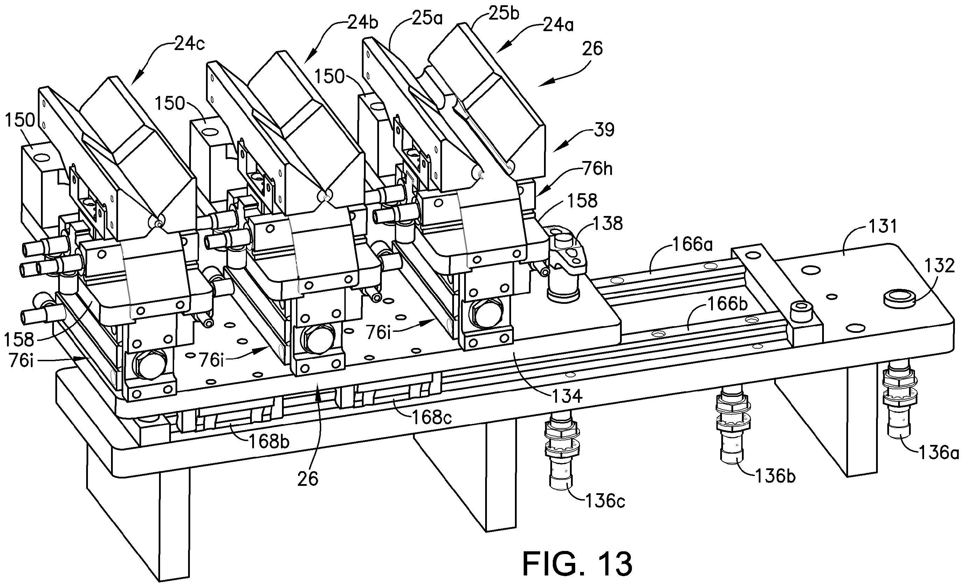

The funnel shuttle 26 is a movable platform having a row of split funnels 24 mounted thereon. The split funnels 24 open or close under computer control. In the funnel closed state, the split funnel is configured to provide a seat for a sleeve and a guide channel for a cable to be passed through the sleeve. The funnel shuttle 26 includes multiple split funnels 24 to accommodate different cable sizes and sleeve sizes, so the correct split funnel 24 must be put in place prior to the start of a sleeve installation sequence. The funnel shuttle 26 can be manually moved left or right on linear rails (not visible in FIG. 10, but see rails 166a and 166b in FIG. 13). The selected split funnel 24 must be aligned with the dual-belt cable feed mechanism 140 (seen in FIG. 3) when the pallet 64 is the correct cable feeding position on the other side of the mounting panel 35. Optionally, the sleeve installation machine 16 may include a stationary cable guide block with a notch for guiding the advancing end of the cable into a guide channel formed by a closed split funnel 24.

FIG. 11 shows a split funnel 24a in an open state, a split funnel 24b in a closed state, and a split funnel 24c in a closed state. Split funnel 24a includes a pair of funnel halves 25a and 25b which have been separated to achieve the open state. Split funnels 24b and 24c have a similar construction.

As seen in FIG. 10, the sleeve installation machine 16 further includes a sleeve gripper 18 and a sleeve holding fixture 28. The sleeve gripper 18 is attached to the end effector 23 of the robot 17 (not shown in FIG. 10, but see in FIG. 12) by means of a sleeve gripper mounting block 73 (see FIG. 10). As best seen in FIG. 11, the sleeve gripper 18 includes a pneumatic actuator 76a and a pair of gripper jaws 19a and 19b which open or close in dependence on which side of pneumatic actuator 76a receives compressed gas.

The sleeve holding fixture 28 comprises a fixture plate 109 that has a slot 111 with machined pockets. Prior to machine activation, the machine operator manually places a solder sleeve or a dead end sleeve in a machined pocket with the ground lead positioned on the fixture plate 109 between a pair of dowels. Under computer control, the robot 17 first moves the end effector 23 so that the attached sleeve gripper 18 is positioned over a selected sleeve that has been placed on the sleeve holding fixture 28. The slot 111 that the sleeve is bridging provides clearance for the jaws of the sleeve gripper 18 to drop into so the sleeve gripper 18 can pick up the sleeve using the appropriate set of half-round cutouts formed in the gripper jaws. This feature enables the sleeve gripper 18 to accommodate the different diameters of solder sleeves and dead end sleeves. After the sleeve gripper 18 grips the sleeve, the robot moves the sleeve gripper under computer control from the sleeve holding fixture to the closed split funnel 24 and places the sleeve on the sleeve seat formed by the closed split funnel 24.

The sleeve installation machine 16 shown in FIG. 10 further includes a cable centering gripper 20, a cable clamp assembly 68, and a slug puller assembly 27, all of which are pneumatically actuated under computer control. In accordance with an alternative embodiment, other types of actuators may be used, such as actuators driven by an electric motor. The cable centering gripper 20 is disposed between the selected split funnel 24 and the cable clamp assembly 68. The cable clamp assembly 68 is disposed between the cable centering gripper 20 and the slug puller assembly 27. After the sleeve has been placed against the end of the closed split funnel 24, the cable is fed into and through the closed split funnel 24 by the dual-belt cable feed mechanism 140. Operating under the control of the computer (with the aid of sensors that detect the position of the tip of the cable), the dual-belt cable feed mechanism 140 feeds the cable end through the closed split funnel 24, sleeve, cable centering gripper 20, and cable clamp assembly 68 until the jacket slug of the cable is correctly positioned where a slug gripper 70 of slug puller assembly 27 is able to grip and pull off the jacket slug (hereinafter "the slug removal position").

The slug puller assembly 27 includes a pneumatic actuator 76d (e.g., a pneumatic cylinder) which is affixed to a slug puller pneumatic cylinder mount 85. The slug puller pneumatic cylinder mount 85 is fastened to the workbench 31. The slug puller assembly 27 further includes a slug gripper 70, which is attached to the distal end of a piston rod of the pneumatic actuator 76d. The cable clamp assembly 68 is mounted to a horizontal cable clamp mounting plate 83, which has one end fixedly coupled to the slug puller pneumatic cylinder mount 85. The cable centering gripper 20 is mounted to a centering gripper mounting bracket 87. The centering gripper mounting bracket 87, in turn, stands on a heater shuttle pneumatic cylinder mounting plate 59 which is fastened to the workbench 31.

After the cable end has been advanced to the slug removal position, the centering cable gripper 20 closes, which keeps the cable centered during the slug removal and sleeve heating processes. Then the cable clamp assembly 68 clamps the cable in position for slug removal. As best seen in FIG. 11, the cable clamp assembly 68 includes a cable clamp block 198, a lever 192, and a cable clamp 194. In response to computer activation of a pneumatic actuator, the lever 192 rotates, thereby pushing the cable clamp 194 downward and pressing the cable 10 against the bottom of a slot inside the cable clamp block 198.

While the cable clamp 194 is engaged, the slug gripper 70 is extended forward by pneumatic actuator 76d to a position overlying the jacket slug 2a of the cable 10 and then the slug gripper 70 closes and securely grips the jacket slug 2a. While the slug gripper 70 is gripping the jacket slug 2a, the pneumatic actuator 76d is actuated to retract the slug gripper 70, which action pulls the jacket slug 2a off the cable 10.

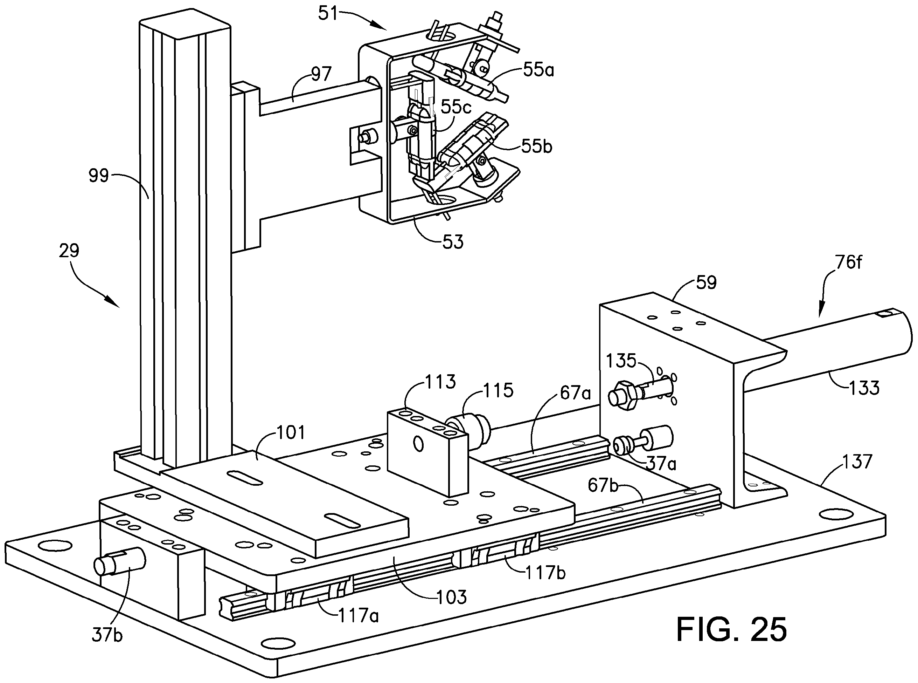

Subsequent to jacket slug removal, the cable 10 is retracted by the dual-belt cable feed mechanism 140 (seen in FIG. 3) under computer control.to place the cable 10 in the correct position for the heating process. More specifically, the cable 10 is retracted until the exposed shielding is centered inside the sleeve 7 which is still seated on the closed split funnel 24. While the sleeve gripper 18 is still holding the sleeve 7, the split funnel 24 is retracted (i.e., moved toward the dual-belt cable feed mechanism 140). Following retraction of the split funnel 24, the sleeve gripper 18 is opened to release the sleeve (which then hangs on the cable) and then the robot 17 moves the sleeve gripper 18 away from the sleeve. The heater shuttle 29 is then moved from a home position to a sleeve heating position by another pneumatic actuator (not shown in FIG. 10, but see pneumatic actuator 76f in FIG. 25).

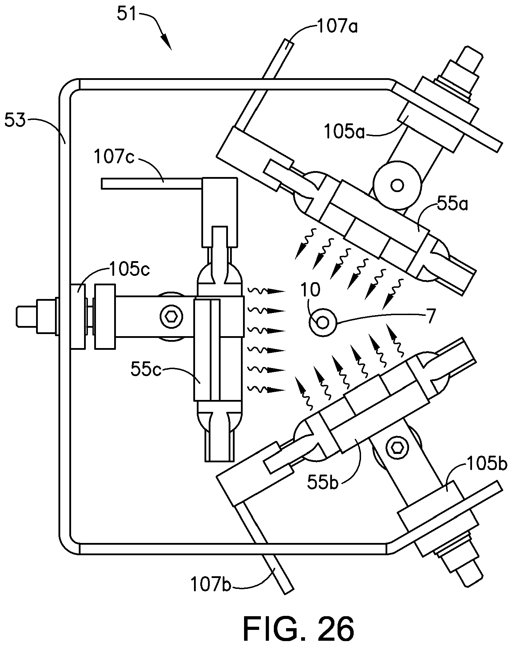

The heater shuttle 29 includes an emitter assembly 51 which surrounds the sleeve 7 when the heater shuttle 29 is in the sleeve heating position (see FIG. 26). The heater shuttle 29 further includes a heater assembly support platform 57 which travels on a pair of mutually parallel linear rails 67a and 67b. As seen in FIG. 10, the heater assembly support platform 57 includes an emitter assembly mounting plate 97, an emitter assembly mounting post 99, an emitter assembly horizontal adjustment plate 101, and an emitter shuttle base plate 103. The emitter assembly 51 is attached to the emitter assembly mounting plate 97.

As best seen in FIG. 11, the emitter assembly 51 includes an emitter mounting bracket 53 and three infrared emitters 55a-55c attached to the emitter mounting bracket 53. The emitter mounting bracket 53 in turn is attached to the emitter assembly mounting plate 97. The infrared emitters 55a-55c are activated under computer control while the sleeve is positioned in the heating zone of the emitter assembly 51 (see FIG. 26). Upon completion of a heating cycle having a temperature and duration sufficient to cause the sleeve to conform and adhere to the cable, the heater shuttle 29 moves back to the home position. Then the hot sleeve is cooled by a jet of cool air flowing out an air nozzle attached to the end of a flexible tube 146 (see FIG. 11). In the proposed implementation depicted in FIG. 11, the air nozzle (not shown, but see FIG. 31) is located underneath the hot sleeve and directs cold air upward.

The sleeve installation machine 16 further includes a ground lead management system 30 mounted to the rear surface of mounting panel 35 by means of a ground lead pusher mounting block 89. The ground lead management system 30 further includes a pneumatic actuator 76g (e.g., a pneumatic cylinder) which is affixed to the ground lead pusher mounting block 89. The ground lead management system 30 further includes a ground lead pusher 91 that is mounted on a distal end of the piston rod of pneumatic actuator 76g and an adjustable depth stop 93 which limits the extension of the piston rod.

In cases where the sleeve is a solder sleeve 12 having the "out back" configuration shown in FIG. 9A, after the solder sleeve 12 has been cooled, the ground lead pusher 91 (see FIG. 10) extends downward and makes contact with angled surfaces of the closed split funnel 24. Then the split funnel 24 is opened to create space for the dual-belt cable feed mechanism 140 to retract the cable-sleeve assembly back onto the pallet 64. The separation of the funnel halves 25a and 25b allows the ground lead pusher 91 to continue moving downward, pushing the ground lead 14 (see FIG. 9A) down into the space between the funnel halves 25a and 25b to prevent snagging of the ground lead during cable retraction.

FIG. 12 is a diagram representing a three-dimensional view of the robot 17 that carries the sleeve gripper 18 under the control of the computer (not shown in FIG. 12, but see the computer 162 identified in FIGS. 30 and 31). The robot 17 has a base 43, a link that is rotatably coupled to the pedestal 43, a link 47 which is rotatably coupled to the link 45 by a first joint, a link 49 which is rotatably coupled to the link 47 by a second joint, and an end effector 23 which is rotatably coupled to the distal end of the link 49. Each movable component of robot 17 is mechanically coupled (e.g., by a respective gear train) to a respective one of a plurality of robot motors (not shown in FIG. 12, but see robot motors 102 identified in FIGS. 30 and 31).

The robot 17 is configured to move the end effector 23 in accordance with robot motor control commands. The robot 17 may be integrated with a vision system that recognizes the solder sleeve, thereby enabling the end effector 23 to be properly aligned when attempting to pick up the sleeve with a predetermined ground lead orientation. Pick and place vision systems are commercially available off the shelf and could be adapted to grip a particular solder sleeve.

The end effector 23 may be adapted for coupling to a robotic arm or to a gantry robot. A gantry robot consists of a manipulator mounted onto an overhead system that allows movement across a horizontal plane. Gantry robots are also called Cartesian or linear robots. The robotic arm may be part of a robot having multi-axis movement capabilities. The robot includes one or more positional sensors (not shown) at, or otherwise associated with, each of the pivots that provide positional data (X, Y, and Z in three-dimensional space) to the data acquisition system for accurately locating the solder sleeves. Any robot or other manipulator capable of controlling the position of the end effector 23 in the manner disclosed herein may be employed.

FIG. 13 is a diagram representing a three-dimensional view of the funnel shuttle 26 seen in FIG. 10. The funnel shuttle 26 includes a funnel shuttle base plate 134 that travels on a pair of linear rails 166a and 166b. The linear rails 166a and 166b are fastened to a funnel shuttle rail mount 131 that stands on the workbench 31 (not shown in FIG. 13, but see FIG. 10). Translation of the funnel shuttle 26 is enabled by a set of four guide carriages which are attached to the funnel shuttle base plate 134 and which are translatably coupled to the linear rails 166a and 166b. Only guide carriages 168b and 168c, which slide on linear rail 166b, are visible in FIG. 13.

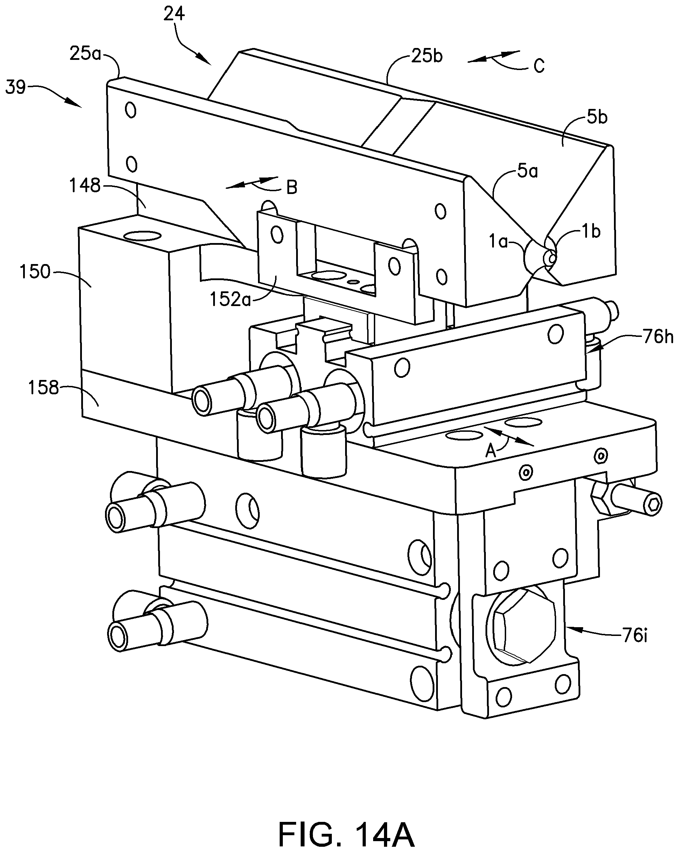

The funnel shuttle 26 further includes a row of three pneumatic actuators 76i, which are mounted (with equal spacing) on funnel shuttle base plate 134, and three split funnel assemblies 39, which are respectively mounted on pneumatic actuators 76i. Each split funnel assembly 39 includes a respective pneumatic actuator 76h, a respective funnel assembly mounting bracket 158, a lower funnel mounting block 150, and a respective split funnel 24 (designated by reference numbers 24a-24c in FIG. 13). (Other components of the funnel assembly 39 will be described below with reference to FIG. 14A.) Each funnel assembly mounting bracket 158 is mounted on a respective pneumatic actuator 76i. Each lower funnel mounting block 150 and each pneumatic actuator 76h are mounted on a respective funnel assembly mounting bracket 158. Each split funnel 24 is mounted on a respective pneumatic actuator 76h. The pneumatic actuators 76h are configured to open or close the split funnels 24a-24c, while the pneumatic actuators 76i are configured to extend or retract the split funnel assemblies 39.

In the scenario depicted in FIG. 13, the split funnel 24a is in an open state, while the split funnels 24b and 24c are in respective closed states. When all three split funnels 24a-24c are closed, the distance between the centerlines of split funnels 24a and 24b equals the distance between the centerlines of split funnels 24b and 24c. In addition, the funnel shuttle rail mount 131 has three equally spaced bushings 132 (only one bushing is visible in FIG. 13; the others being hidden behind linear rail 166b). The spacing between the centers of bushings 132 is the same as the spacing between the centerlines of split funnels 24a-24c.

The multiple split funnels 24a-24c accommodate different cable sizes and sleeve sizes, so the correct split funnel must be put in place prior to the start of a sleeve installation sequence. The funnel shuttle 26 can be manually moved left or right on linear rails 166a and 166b. The funnel shuttle 26 is equipped with a T-pin 138 that is designed to fit inside each bushing 132 for the purpose of locking the funnel shuttle 26 in one of three positions. In the first position, the split funnel 24a is aligned with the dual-belt cable feed mechanism 140; in the second position, the split funnel 24b is aligned with the dual-belt cable feed mechanism 140; in the third position, the split funnel 24c is aligned with the dual-belt cable feed mechanism 140. The machine operator removes the T-pin before moving the funnel shuttle 26 to one of the three positions. Three proximity sensors 136a-136c are situated directly under the respective bushings 132. Once the machine operator moves the funnel shuttle 26 to the correct position and places the T-pin 138 in the appropriate bushing 132, the proximity sensor underneath that bushing detects the end of the T-pin 138. The proximity sensor data is transmitted to the computer, which then verifies that the sensor status matches the split funnel that has been selected on the human-machine interface.

FIG. 14A is a diagram representing a three-dimensional view of a split funnel assembly 39 mounted to a pneumatic actuator 76i which is configured to extend or retract the split funnel assembly 39 in response to a control signal from a computer (not shown in FIG. 14A). More specifically, the funnel assembly mounting bracket 158 of split funnel assembly 39 is able to translate in the opposite directions indicated by double-headed arrow A in FIG. 14A.

The split funnel assembly 39 further includes the following components: a lower funnel mounting block 150 mounted on the funnel assembly mounting bracket 158; a lower funnel 148 mounted on the lower funnel mounting block 150; a pneumatic actuator 76h mounted on the funnel assembly mounting bracket 158; a pair of funnel half mounting brackets 152a and 152b (funnel half mounting bracket 152b is hidden in FIG. 14A) fastened to the pneumatic actuator 76h; and a pair of funnel halves 25a and 25b fastened to the funnel half mounting brackets 152a and 152b respectively. The pneumatic actuator 76h is configured to move the funnel halves 25a and 25b in opposite directions toward and away from each other, as indicated by double-headed arrows B and C respectively in FIG. 5A. The directions indicated by double-headed arrows B and C are perpendicular to the directions indicated by double-headed arrow A. In other words, during opening or closing of the split funnel 24, the funnel halves 25a and 25b move in a direction which is orthogonal to the direction in which the split funnel assembly 38 extends or retracts.

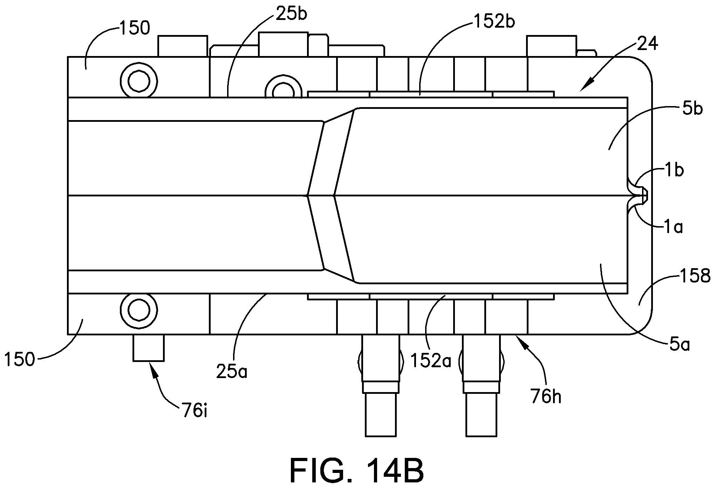

As seen in FIG. 14A, the funnel half 25a has an angled surface 5a and a funnel extension 1a, whereas the funnel half 25b has an angled surface 5b and a funnel extension 1b. FIG. 14B is a diagram representing a top view of a closed split funnel in accordance with one embodiment. As seen in FIG. 14B, while the split funnel 24 is in a closed state, the funnel extensions 1a and 1b form a seat for the sleeve at the front end of the split funnel 24. In addition, angled surfaces 5a and 5b form a groove on which the ground lead 14 may rest when a solder sleeve 12 has the "out back" configuration as seen in FIG. 9A.

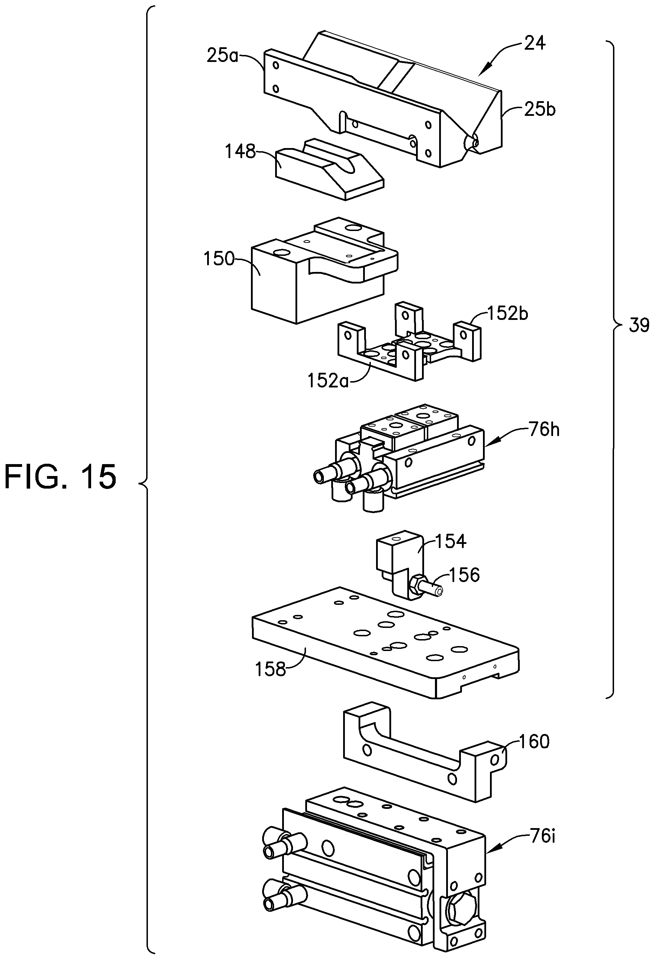

FIG. 15 is a diagram representing an exploded view of the components of the subsystem depicted in FIG. 14A. The following components (some of which are hidden in the views of FIGS. 14A and 14B) are shown individually and in three dimensions in FIG. 15: split funnel 24 including funnel halves 25a and 25b, lower funnel 148, lower funnel mounting block 150, funnel half mounting brackets 152a and 152b, pneumatic actuator 76h, funnel retract travel limit mount 154, funnel retract travel limit screw 156, funnel assembly mounting bracket 158, funnel travel limit bracket 160, and pneumatic actuator 76i.

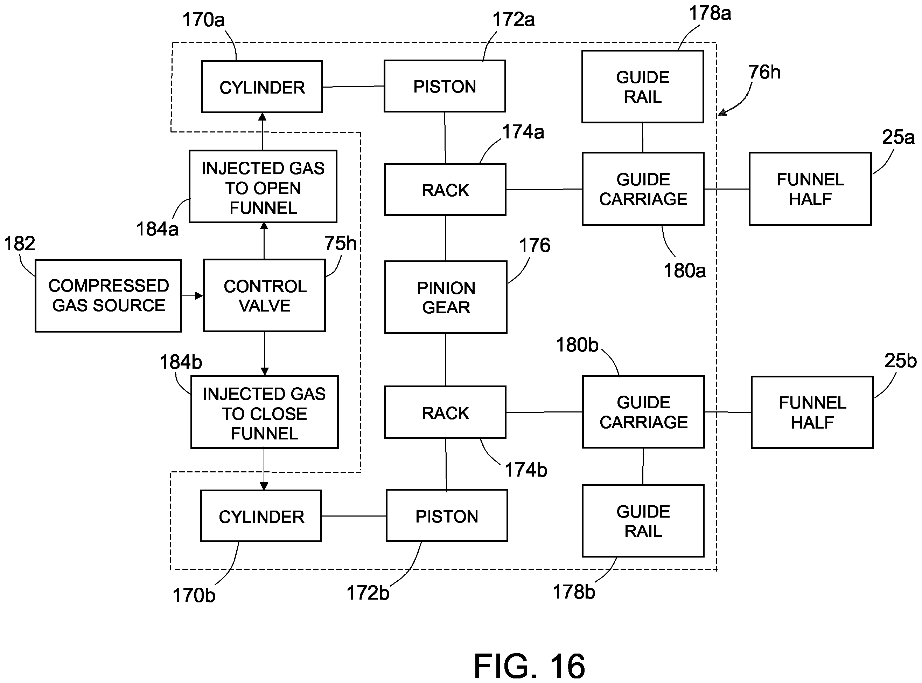

FIG. 16 is a block diagram identifying some components of a pneumatic actuator for a gripper in accordance with one embodiment. In particular, the pneumatic actuator 76h depicted in FIG. 14A may have the configuration of components depicted in FIG. 16. In this configuration, pneumatic actuator 76h includes first and second pneumatic cylinders 170a and 170b and first and second pistons 172a and 172b which are linearly slidable inside first and second pneumatic cylinders 170a and 170b. The pneumatic actuator 76h further includes first and second racks 174a and 174b which are fixedly coupled to and move in tandem with pistons 172a and 172b. The first and second racks 174a and 174b have respective rows of teeth. The pneumatic actuator 76h further includes a pinion gear 176 which has circumferential teeth. Some teeth of pinion gear 176 engage teeth of the first rack 174a; other teeth of pinion gear 176 engage teeth of the second rack 174b. The pneumatic actuator 76h further includes first and second linear guide rails 178a and 178b and first and second guide carriages 180a and 180b which are slidably coupled to first and second linear guide rails 178a and 178b respectively. The first guide carriage 180a is fastened to the first rack 174a and translates in tandem with the first rack 174a; the second guide carriage 180b is fastened to the second rack 174b and translates in tandem with the second rack 174b. The first funnel half 25a is fastened to guide carriage 180a; the second funnel half 25b is fastened to guide carriage 180b.

The funnel halves 25a and 25b may be opened or closed in dependence on a command received from the computer 162 (not shown in FIG. 16, but see FIGS. 5 and 30) by a control valve 75h which is connected by tubing to a compressed gas source 182. In response to an open funnel command, the control valve 75h directs compressed gas to be injected into pneumatic cylinder 170a, which gas injection causes piston 172a and rack 174a to translate in one direction, thereby moving guide carriage 180a away from guide carriage 180b. In addition, translation of rack 174a causes pinion gear 176 to rotate, which in turn causes rack 174b to translate in the opposite direction, thereby moving guide carriage 180b away from guide carriage 180a. The result is that the funnel halves 25a and 25b separate to open the split funnel 24.

Conversely, in response to a close funnel command, the control valve 75h directs compressed gas to be injected into pneumatic cylinder 170b, which gas injection causes piston 172b and rack 174b to translate in the opposite direction, thereby moving guide carriage 180b toward guide carriage 180a. In addition, translation of rack 174b causes pinion gear 176 to rotate, which in turn causes rack 174a to translate in the one direction, thereby moving guide carriage 180a toward guide carriage 180b. The result is that the funnel halves 25a and 25b come together to close the split funnel 24.

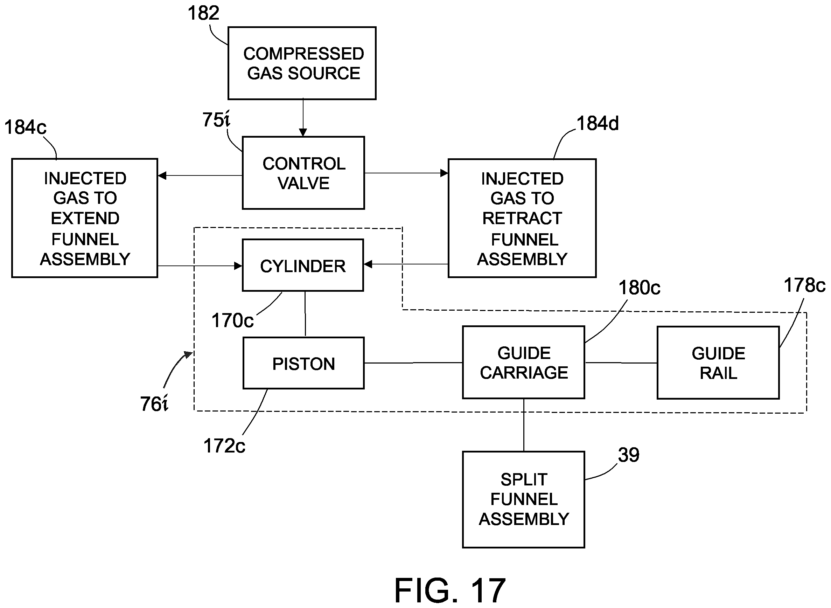

FIG. 17 is a block diagram identifying some components of a pneumatic actuator for a linear slide in accordance with one embodiment. In particular, the pneumatic actuator 76i depicted in FIG. 14A may have the configuration of components depicted in FIG. 17. In this configuration, the pneumatic actuator 76i includes a pneumatic cylinder 170c and a piston 172c which is linearly slidable inside pneumatic cylinder 170c. The pneumatic actuator 76i further includes a linear guide rail 178c and a guide carriage 180c which is slidably coupled to linear guide rail 178c. The guide carriage 180c is mechanically coupled to piston 172c and translates on linear guide rail 178c in response to extension or retraction of piston 172. The split funnel assembly 39 is fixedly coupled to and moves in tandem with guide carriage 180c.

The split funnel assembly 39 may be extended or retracted in dependence on a command received from the computer 162 by a control valve 75i which is connected by tubing to the compressed gas source 182. In response to an extend funnel assembly command, the control valve 75i directs compressed gas 184c to be injected into one side of pneumatic cylinder 170c, which gas injection causes piston 172c and rack 174c to translate in one direction, thereby moving guide carriage 180c in a direction such that the split funnel assembly 39 is extended. Conversely, in response to a retract funnel assembly command, the control valve 75i directs compressed gas 184c to be injected into the other side of pneumatic cylinder 170c, which gas injection causes piston 172c and rack 174c to translate in the opposite direction, thereby moving guide carriage 180c in a direction such that the split funnel assembly 39 is retracted.

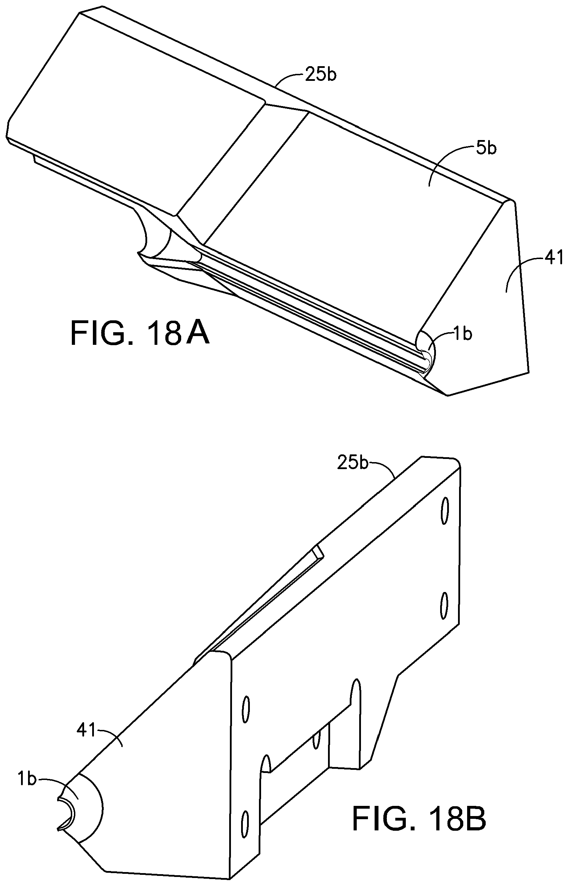

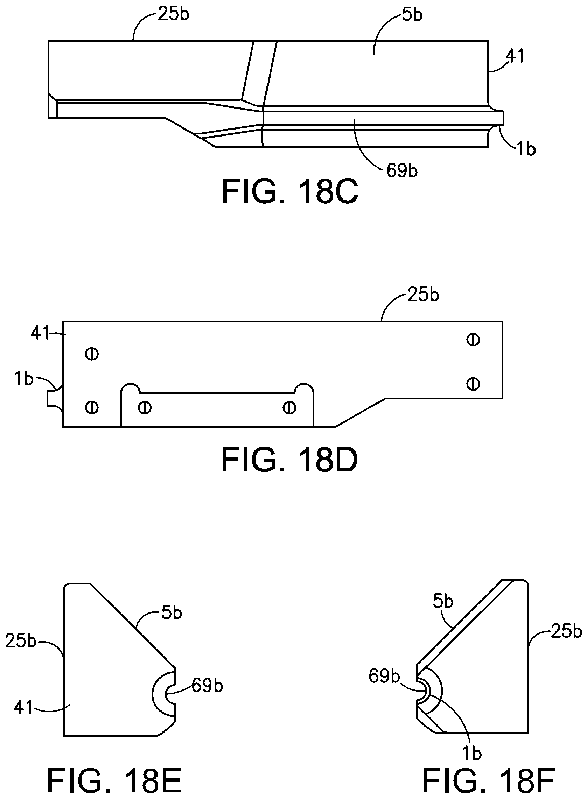

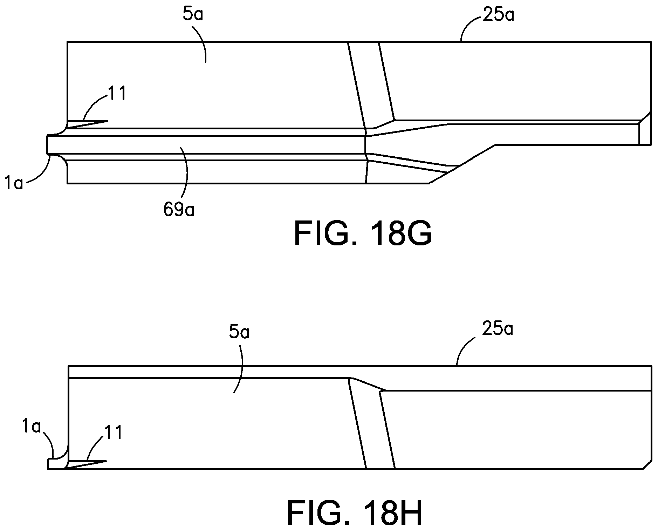

FIGS. 18A through 18F show different views of funnel half 25b depicted in FIG. 14A. As best seen in FIG. 18A, funnel half 25b has an angled surface 5b and a forward end face 41. A funnel extension 1b projects from the forward end face 41 in the forward direction. The funnel half 25b also has a cable guide channel 69b that extends to the funnel extension 1b. The other funnel half 25a has a mirror-image construction. For example, as seen in FIG. 18H, funnel half 25a has a funnel extension 1a and a cable guide channel 69a. When the funnel halves 25a and 25b are in contact (i.e., the split funnel 24 is closed), the funnel extensions 1a and 1b form a seat for the sleeve; the second cable guide channels 69a and 69b form a repeatable path for the cable to follow through the funnel; and the angled surfaces 5a and 5b form a groove in which the ground lead rests (when the sleeve is a solder sleeve with the "out back" configuration).

Each funnel extension 1a and 1b comprises a respective thin arc-shaped edge. These arc-shaped edges form a circular seat which fits inside one end of the sleeve while the split funnel 24 is in the funnel closed state. The funnel halves are made of steel, primarily due to the thin cross section of the arc-shaped edges that interface with the sleeve.

In accordance with a further enhancement, each of the funnel halves 25a and 25b may be provided with a ground lead clearance slot 11 that is formed in the angled surface adjacent the funnel extension. FIGS. 18G and 18H show top and side views respectively of a funnel half 25a that is configured with a ground lead clearance slot 11. In accordance with one proposed implementation, the ground lead clearance slot 11 extends back into the funnel at a 10° angle. The other funnel half 25b has a mirror-image construction. When the sleeve has the "out back" configuration and the split funnel 24 is closed, the ground lead clearance slots 11 of funnel halves 25a and 25b allow clearance for the ground lead while the sleeve is sitting on the funnel extensions 1a and 1b.

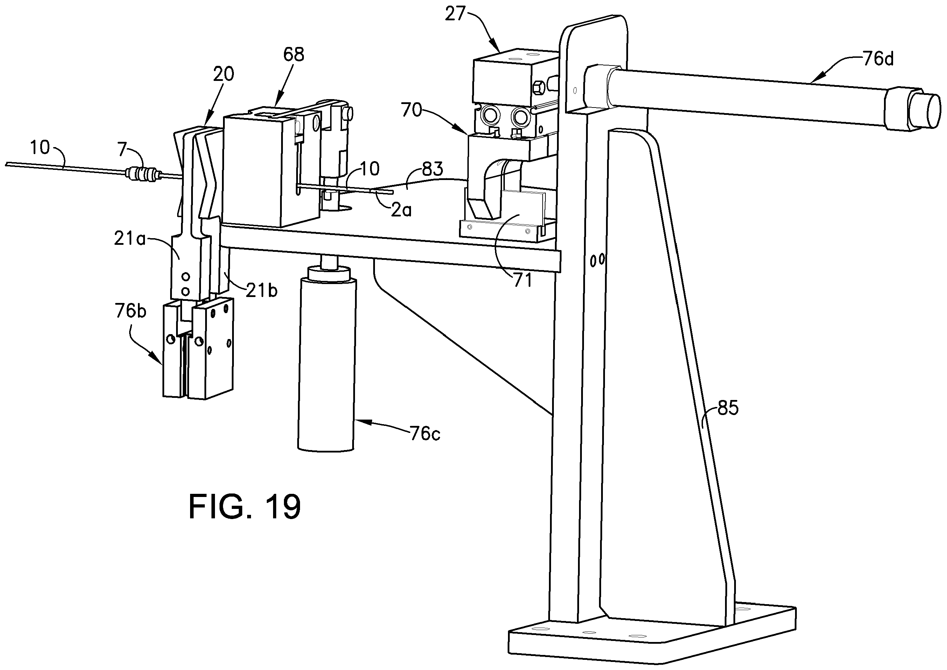

FIG. 19 is a diagram representing a three-dimensional view of the automated apparatus for centering and clamping a cable and then removing the jacket slug depicted in FIG. 10. The automated apparatus includes a cable centering gripper 20, a cable clamp assembly 68, and a slug puller assembly 27, which are respectively pneumatically actuated by pneumatic actuators 76b, 76c, and 76d under computer control. Operating under the control of the computer 162 (see FIG. 5), the dual-belt cable feed mechanism 140 (see FIG. 3) feeds the end of cable 10 through the closed split funnel 24, sleeve 7, open cable centering gripper 20, and cable clamp assembly 68 until the jacket slug 2a of cable 10 is in the slug removal position (as shown in FIG. 19).

The slug puller assembly 27 includes a pneumatic actuator 76d (e.g., a pneumatic cylinder) which is affixed to a slug puller pneumatic cylinder mount 85. The slug puller assembly 27 further includes a slug gripper 70, which is attached to the distal end of a piston rod of the pneumatic actuator 76d. The cable clamp assembly 68 is mounted to a horizontal cable clamp mounting plate 83, which has one end fixedly coupled to the slug puller pneumatic cylinder mount 85.

When the cable centering gripper 20 is closed, the cable 10 is centered and aligned with the cable clamp assembly 68, which then clamps the cable in the slug removal position. To remove the jacket slug 2, the pneumatic actuator 76d is extended, the slug gripper 70 grips the jacket slug 2a, and then the pneumatic actuator 76d is retracted. During retraction, the jacket slug 2a is dislodged from the slug gripper 70 by a slug ejection plate 71 which is fastened to the cable clamp mounting plate 83 and extends vertically upward.

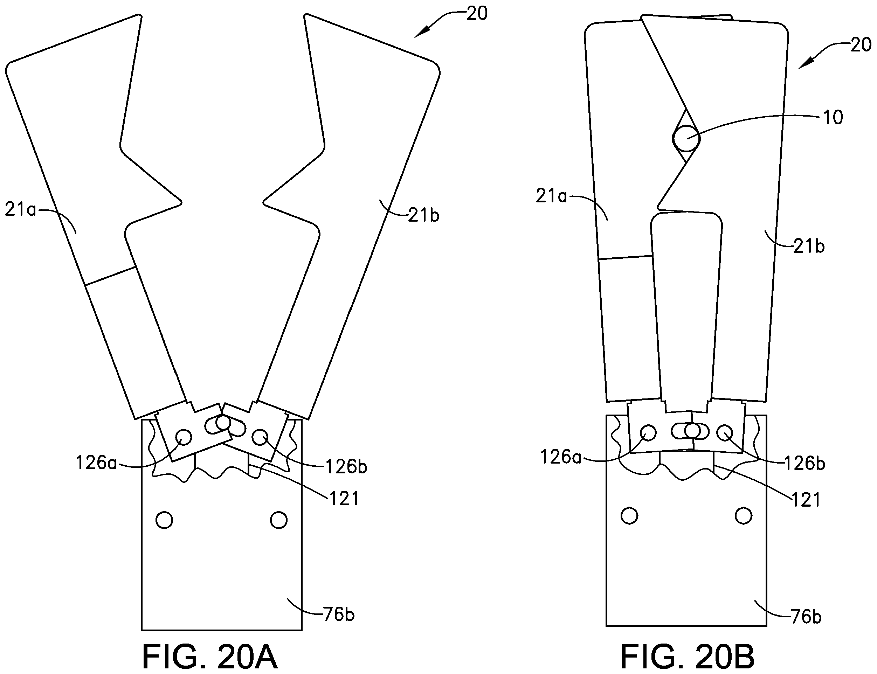

FIGS. 20A and 20B are diagrams representing respective front views of the cable centering gripper 20. FIG 20A shows the cable centering gripper 20 in an open state; FIG 20B shows the cable centering gripper 20 in a partially closed state wherein the cable 10 has been centered. The cable centering gripper 20 includes a pneumatic actuator 76b and a pair of gripper jaws 21a and 21b which open or close in dependence on which side of pneumatic actuator 76b receives compressed gas. The gripper jaws 21a and 21b open and close angularly, rotating about pivot pins 126a and 126b respectively either toward or away from each other, but they are driven by a piston rod 121 of pneumatic actuator 76b.

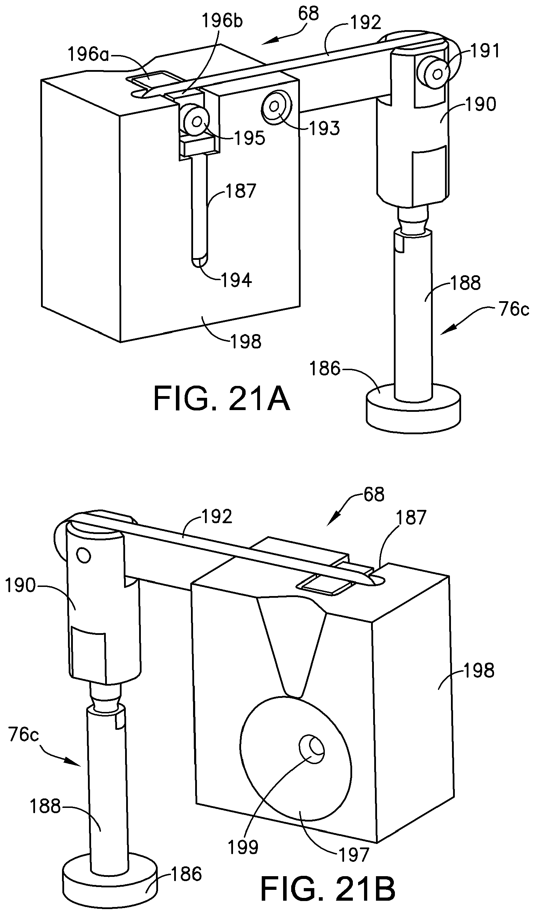

The cable centering gripper 20 ensures that the wires 6 and 8 (see FIG. 9A) at the end of the cable 10 are kept together and that the wires 6 and 8 are on-axis with the funnel extensions 1a and 1b of the closed funnel and will impinge on the slug removal cone 197 (see FIG. 21B) of the cable clamp assembly 68. However, the cable centering gripper 20 does not actually grip the cable 10. When the V-shaped gripper jaws 21a and 21b overlap as seen in FIG. 20B, the size of the opening in the middle is reduced, but the gripper jaws 21a and 21b jaws stop short of actually gripping or clamping the cable 10 in place. In order for the jacket slug 2a (see FIG. 19) to be removed, the cable clamp 194 must be engaged to ensure that the cable 10 does not move while the slug gripper 70 pulls the jacket slug 2a off of the cable 10. Once the jacket slug 2a has been removed, the cable clamp 194 retracts, but the cable centering gripper 20 remains in the partially closed position until after the cable 10 has been retracted through the open split funnel 24. The partial closure of the cable centering gripper 20 may be timed to occur subsequent to the passage of the cable tip 10b (see FIG. 2) through the open gripper and prior to cable tip 10b entering cable clamp assembly 68.

FIGS. 21A and 21B are diagrams representing three-dimensional views from different viewpoints of the cable clamp assembly 68. As seen in FIG. 19, the cable clamp assembly 68 includes a pneumatic actuator 76c, which is mounted to the workbench 31 (see FIG. 10), and a cable clamp block 198, which is mounted to the cable clamp mounting plate 83 (see FIG. 19). Only the piston 188 and piston rod 188 of pneumatic actuator 76c are shown in FIGS. 21A and 21B. The pneumatic actuator 76c is configured to change to a cable clamped state (e.g., extend) in response to a clamp cable command from the computer 162 (not shown in FIGS. 21A and 21B).

As seen in FIG. 21A, the cable clamp block 198 has a cable clamp guide slot 187 which is configured to receive a cable clamp 194. The opposing surfaces of cable clamp guide slot 187 restrains the cable clamp 194 so that the latter moves between cable clamped and cable unclamped positions during cable clamp displacement. The cable clamp assembly 68 further includes a piston rod extension 190 which is affixed to the piston rod 188 and a lever 192 which has one end coupled to piston rod extension 190 and the other end coupled to cable clamp 194. An intermediate portion of the lever 192 is rotatably coupled to the cable clamp block 198 by means of a lever pivot shoulder screw 193. In response to extension of piston rod 188, the lever 192 rotates in a counterclockwise direction (from the viewpoint seen in FIG. 21A) about the lever pivot shoulder screw 193, thereby displacing the cable clamp 194 downward into the cable clamped position. The cable clamp 194 remains in the unclamped cable position while the cable is being fed through the cable clamp assembly 68.

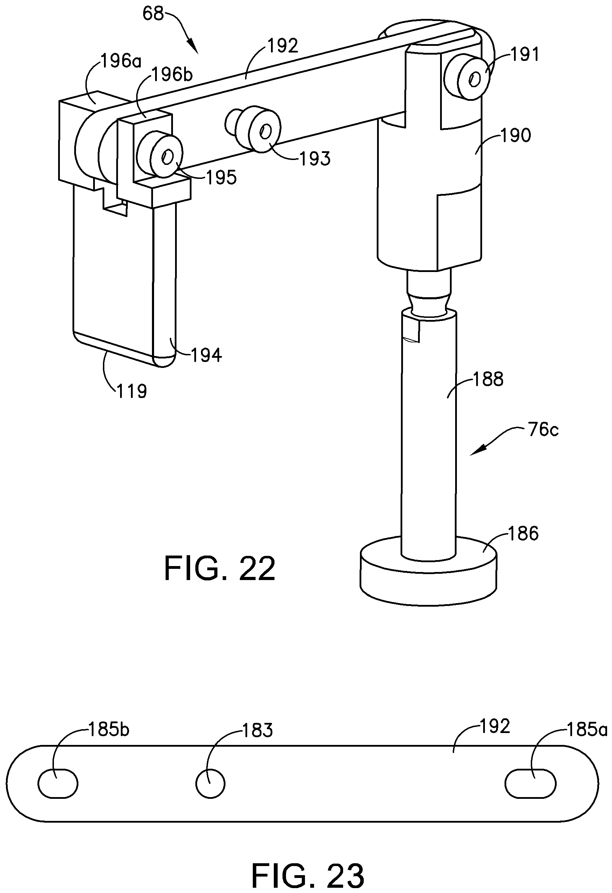

As seen in FIG. 21B, the cable clamp block 198 is configured with a cable entrance 199 that connects the cable guide cone 197 to the cable clamp guide slot 187. When the cable tip 10b impinges on the cable guide cone 197, the still advancing cable tip 10b is guided toward and then enters the cable entrance. While the cable clamp 194 is in the unclamped cable position, the cable is able to pass through the cable clamp guide slot 187. Then the pneumatic actuator 76c is extended to move the cable clamp 194 to the cable clamped position, where the resulting frictional forces exerted on the cable 10 by the bottom edge 119 (see FIG. 22) of cable clamp 194 and the bottom surface of cable clamp guide slot 187 prevent further movement of the cable 10.

FIG. 22 shows a three-dimensional view of the cable clamp assembly 68 with the cable clamp block 198 removed. FIG. 23 shows a side view of lever 192 in isolation. As seen in FIG. 23, the lever 192 has a circular pivot hole 183 and two oblong slots 185a and 185b. The piston rod end shoulder screw 191 seen in FIG. 22 passes through the oblong slot 185a seen in FIG. 23, thereby coupling one end of lever 192 to a pair of mounting flanges of the piston rod extension 190. The cable clamp shoulder screw 195 seen in FIG. 22 passes through the oblong slot 185b seen in FIG. 23, thereby coupling the other end of lever 192 to a pair of mounting flanges 186a and 196b of the cable clamp 194. The lever pivot shoulder screw 193 seen in FIG. 22 passes through the circular opening 183 seen in FIG. 23, thereby rotatably coupling lever 192 to cable clamp block 198. As lever 192 pivots, the piston rod end shoulder screw 191 moves in oblong slot 185a and the cable clamp shoulder screw 195 moves in oblong slot 185b, thereby adjusting for the fact that the ends of the lever 192 are traveling along arcs while the piston rod extension 190 and the cable clamp 194 are translating.

Referring again to FIG. 19, while the cable clamp 194 is engaged, the slug gripper 70 is extended forward by pneumatic actuator 76d to a position overlying the jacket slug 2a of the cable 10 and then the slug gripper 70 closes and securely grips the jacket slug. While the slug gripper 70 is gripping the jacket slug, the pneumatic actuator 76d is actuated to retract the slug gripper 70, which action pulls the jacket slug off the cable.

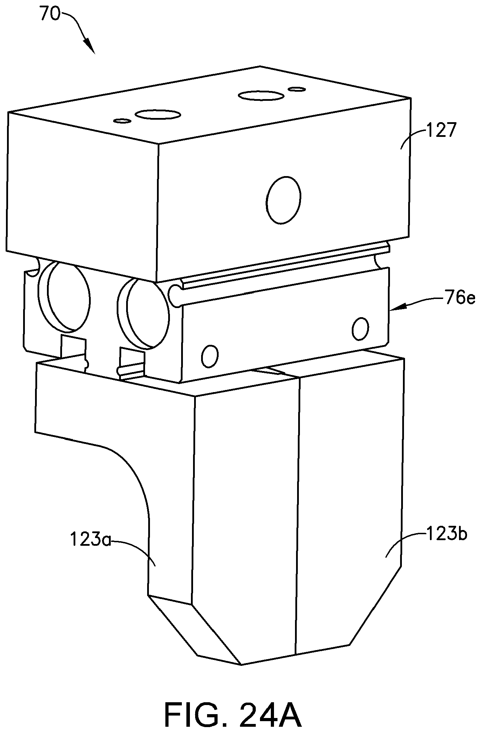

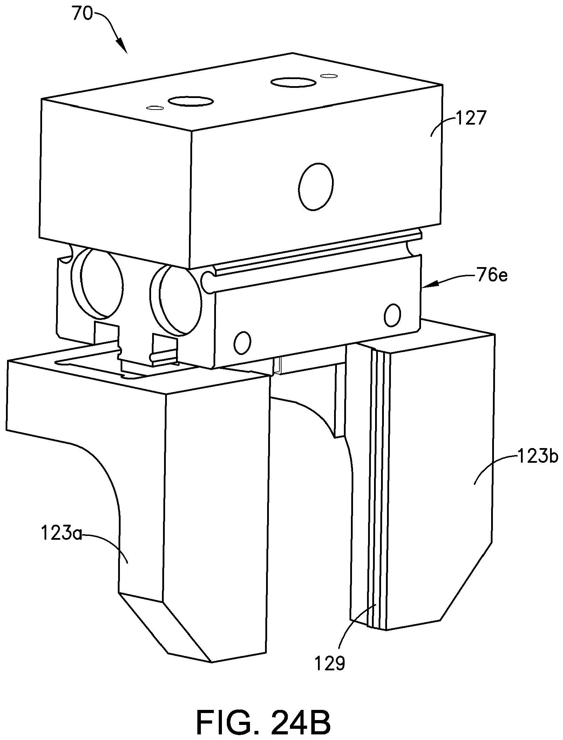

FIGS. 24A and 24B are diagrams representing three-dimensional views of some components of the slug gripper 70. FIG 24A shows the slug gripper in a closed state; FIG 24B shows the slug gripper in an open state. The slug gripper 70 includes a slug gripper mounting block 127 which is affixed to the distal end of a piston rod of the pneumatic actuator 76d. The slug gripper 70 further includes a pneumatic actuator 76e which is fastened to the slug gripper mounting block 127. The pneumatic actuator 76e may have components which are configured in the manner depicted in FIG. 16. The slug gripper 70 further includes a pair of slug gripper jaws 123a and 123b which are fastened to respective guide carriages of pneumatic actuator 76e and which translate in opposite directions between slug gripper open and closed positions. The slug gripper jaws 123a and 123b have mutually opposing ridged or textured surfaces 129 which prevent slippage when gripping the jacket slug 2a.

The pneumatic actuator 76d is configured to extend in response to an extend slug gripper command and to retract in response to a retract slug gripper command. The guide carriages 180a and 180b of pneumatic actuator 76e translate from slug gripper open positions to slug gripper closed positions in response to a grip slug command. The computer 162 (see FIG. 30) is configured to output the extend slug gripper command subsequent to outputting the clamp cable command, output the grip slug command subsequent to outputting the extend slug gripper command, and output the retract slug gripper command subsequent to outputting the grip slug command.

Subsequent to jacket slug removal, the cable 10 is retracted until the shielding exposed by slug removal is centered inside the sleeve 7. Meanwhile, the cable 10 (and sleeve 7 hanging thereon) is still centered by the partially closed cable centering gripper 20. Then the split funnel assembly 39 is retracted, following which the heat shuttle 29 is moved to the sleeve heating position.

FIG. 25 shows a three-dimensional view of the heater shuttle 29. The heater shuttle 29 includes an emitter assembly 51 and a heater assembly support platform 57 which travels on a pair of mutually parallel linear rails 67a and 67b. The heater assembly support platform 57 includes an emitter assembly mounting plate 97, an emitter assembly mounting post 99, an emitter assembly horizontal adjustment plate 101, and a heater shuttle base plate 103. The emitter assembly 51 is attached to the emitter assembly mounting plate 97. Translation of the heater shuttle 29 is enabled by a set of four guide carriages which are attached to the heater shuttle base plate 103 and which are translatably coupled to the linear rails 67a and 67b. Only guide carriages 117a and 117b, which slide on linear rail 67b, are visible in FIG. 25. The linear rails 67a and 67b are fastened to a plate 137 which is fastened to workbench 31 (see FIG. 10).

The heater shuttle 29 further includes a heater shuttle piston rod coupling mount block 113, which is mounted on the heater shuttle base plate 103, and a heater shuttle piston rod coupling 115, which is mounted to the heater shuttle piston rod coupling mount block 113. During system operation, the heater shuttle piston rod coupling 115 is coupled to a piston rod 135 of a pneumatic actuator 76f. However, FIG. 16 shows the piston rod 135 in a retracted state and uncoupled from heater shuttle piston rod coupling 115. A pneumatic cylinder 133 of the pneumatic actuator 76f is mounted to the heater shuttle pneumatic cylinder mounting plate 59, which in turn is fastened to the plate 137. A gas shock absorber 37a is also mounted to heater shuttle pneumatic cylinder mounting plate 59. Another gas shock absorber 37b is mounted at the other end of plate 137. The pneumatic actuator 76f pulls the heater shuttle 29 into the sleeve heating position after the sleeve 7 and cable 10 have been placed in the correct positions. The gas shock absorbers 37a and 37b minimize the vibration that is transmitted into the infrared emitters 55a-55c when the heater shuttle 29 moves back and forth.

FIG. 26 shows a side view of the emitter assembly 51. The emitter assembly 51 includes an emitter mounting bracket 53, three emitter mounts 105a-105c fastened to the emitter mounting bracket 53, and three infrared emitters 55a-55c respectively mounted to the emitter mounts 105a-105c. The infrared emitters 55a-55c are connected to an AC power supply (not shown in FIG. 26, but see FIG. 31) by respective electrical cables 107a-107c. The wave-like arrows in FIG. 26 represent infrared radiation produced when the infrared emitters 55a-55c are activated.

The infrared emitters 55a-55c are spaced around the sleeve 7 with a small gap between infrared emitters 55a and 55b which allows the stationary sleeve to enter the heating zone when the heater shuttle 29 is moved to the sleeve heating position. The infrared emitters 55a-55c are activated under computer control while the sleeve 7 is positioned in the heating zone. Upon completion of a heating cycle having a temperature and duration sufficient to cause the sleeve 7 to shrink, the infrared emitters 55a-55c are turned off and heater shuttle 29 moves back to the home position. Then the hot sleeve is cooled by a jet of cool air. After cooling, a pair of laser sensors 61 (only one of which is visible in FIG. 10) are used to measure the outer diameter of the sleeve. The laser sensors 61 are mounted to laser sensor mounts 63a and 63b (see FIG. 10) in fixed positions that allow the sleeve diameter to be measured from two directions after the heater shuttle 29 has moved back to the home position.

In cases where the sleeve is a solder sleeve 12 having the "out back" configuration, after the outer diameter of the solder sleeve 12 has been measured, the ground lead management system 30 is activated. In the "out front" orientation, the ground lead is not over the funnel, so it does not need to be pushed down into the V-shaped groove on top of the funnel before the cable is retracted.

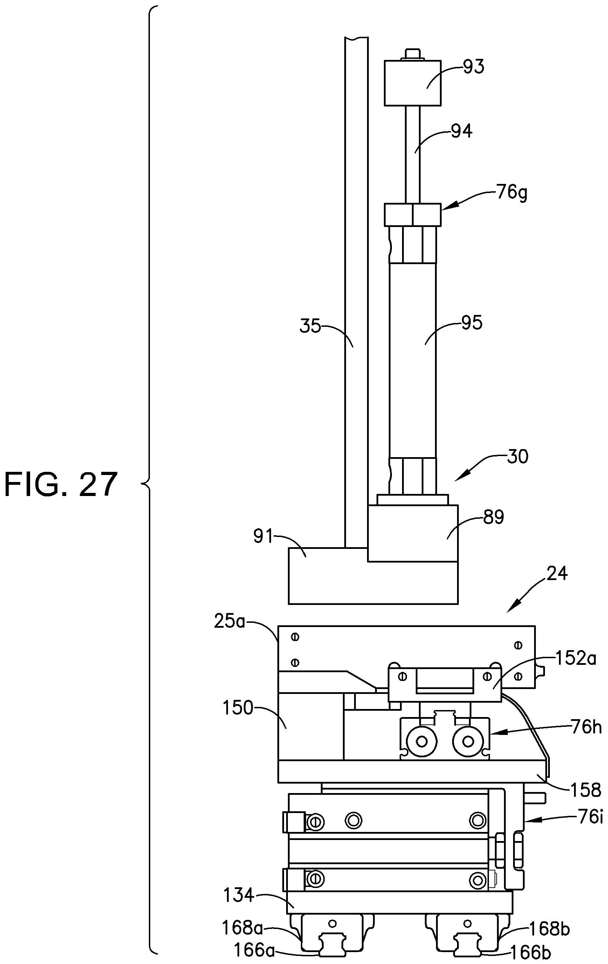

FIG. 27 is a side view of the ground lead management system 30 and the funnel shuttle 24. The funnel shuttle 24 has already been described with reference to FIGS. 14A, 14B, and 15, which description will not be repeated here. As seen in FIG. 27, the ground lead management system 30 is mounted to the mounting panel 35 by means of a ground lead pusher mounting block 89. The ground lead management system 30 further includes a pneumatic actuator 76g which is affixed to the ground lead pusher mounting block 89. The pneumatic actuator 76g includes a pneumatic cylinder (the piston is inside the pneumatic cylinder and not visible in FIG. 27). The pneumatic actuator 76g is mounted to the ground lead pusher mounting block 89. The ground lead management system 30 further includes a ground lead pusher 91 that is affixed to a first piston rod (not visible in FIG. 27) of pneumatic actuator 76g. An adjustable depth stop 93, which limits the depth of the piston inside the pneumatic cylinder, is mounted to the end of a second piston rod 94.

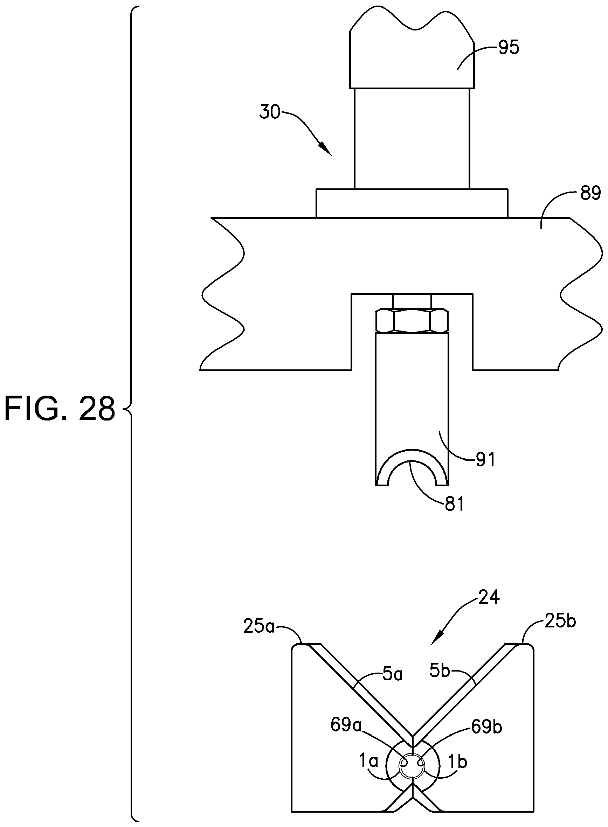

FIG. 28 shows an end view of a portion of ground lead management system 30 with retracted ground lead pusher 91 disposed above a closed split funnel 24. The ground lead pusher 91 has a ground lead pusher channel 81 which is configured to receive and then exert downward pressure on a ground lead 14 (not shown in FIG. 28, but see FIG. 9A) that is resting on the groove formed by angled surfaces 5a and 5b of closed funnel halves 25a and 25b. The ground lead pusher 91 extends downward and makes contact with angled surfaces 5a and 5b. Then the split funnel 24 is opened to create space for the dual-belt cable feed mechanism 140 (see FIG. 12) to retract the cable-sleeve assembly back onto the pallet 64. The separation of the funnel halves 25a and 25b allows the ground lead pusher 91 to continue moving downward, pushing the ground lead 14 down into the space between the funnel halves 25a and 25b to prevent snagging of the ground lead during cable retraction. Once the cable 10 has been retracted, the ground lead pusher 91 is retracted to the home position.

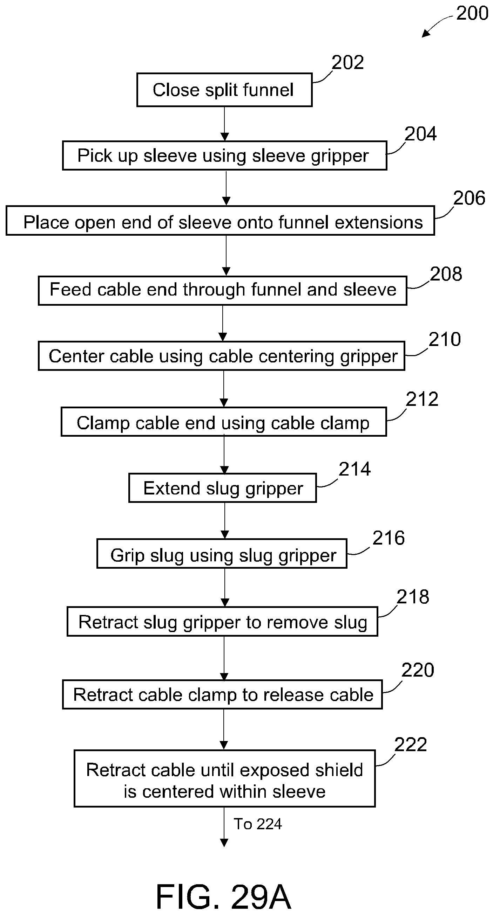

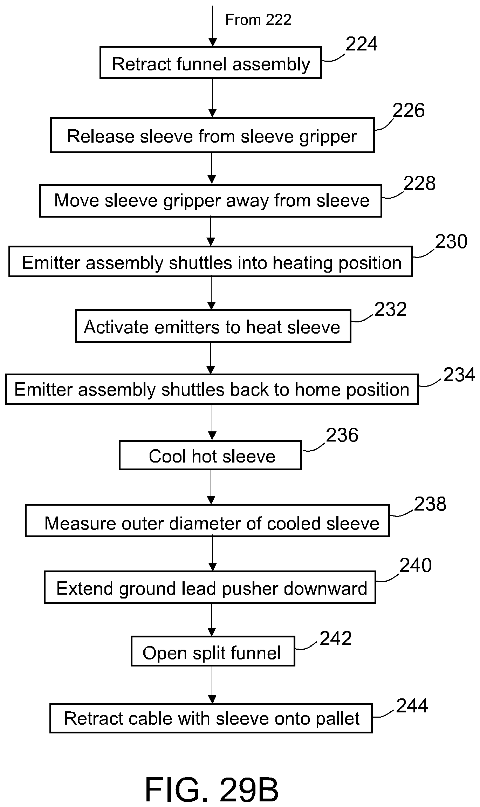

FIGS. 29A and 29B form a flowchart identifying steps of an automated method 200 for processing the end of a cable using the sleeve installation machine 16 depicted in FIG. 10, the robot depicted in FIG. 12, and the computer 162 identified in FIG. 5. All of the steps listed in this flowchart are controlled by computer 162, which also controls the robot 17.

Referring to FIG. 29A, the automated process 200 begins when the split funnel 24 is closed by moving the funnel halves 25a and 25b to their respective funnel closed positions (step 202). Then a sleeve is picked up from the sleeve holding fixture 28 using the sleeve gripper 18, which is carried by the robot 17 (step 204). Then an open end of the sleeve is placed onto the funnel extensions 1a and 1b of the closed split funnel 24 (step 206). After the sleeve has been seated on the funnel extensions 1a and 1b, the dual-belt cable feed mechanism 140 feeds an end of the cable through the split funnel 24 and the sleeve (step 208). Upon completion of the cable advancement, the cable is centered using the cable centering gripper 20 (step 210). Immediately thereafter the cable is clamped using the cable clamp 194 (step 212). While the cable is clamped, the slug gripper 70 is extended (step 214); the jacket slug of the clamped cable is gripped by the slug gripper 70 (step 216); and then the slug gripper is retracted to remove the jacket slug and expose the underlying cable shielding (step 218). After jacket slug removal, the cable clamp 194 is retracted to release the cable (step 220). Then the cable is retracted by the dual-belt cable feed mechanism 140 until the exposed shielding is centered within the sleeve seated on the funnel extensions 1a and 1b (step 222).

Now referring to FIG. 29B, subsequent to centering the exposed shielding inside the sleeve, the split funnel 24 is retracted away from the cable centering gripper 20 (step 224). Then the sleeve gripper 18 releases the sleeve, which then hangs on the cable assembly (step 226). Then the robot 17 moves the sleeve gripper away from the sleeve (step 228). The emitter assembly 51 is then shuttled from the home position to the sleeve heating position (step 230). In the home position, the infrared emitters 55a-55c are activated to melt the sleeve (step 232). Upon completion of the heating cycle, the emitter assembly 51 is shuttled from the sleeve heating position back to the home position (step 234). Thereafter the hot sleeve is cooled with a jet of cold air (step 236). After cooling, laser sensors are used to measure the outer diameter of the sleeve (step 238). If the laser sensor system acquires sensor data indicating that the outer diameter of the cooled sleeve is too large, the machine operator is notified via a message displayed on the human-machine interface that the final diameter of the sleeve was outside of the allowable diameter range. (It would then be up to the operator to remove the non-conforming cable.) After the sleeve outer diameter has been measured, the ground lead pusher 91 is extended downward and into contact with the ground lead (step 240). Then the split funnel 24 is opened (step 242). (More specifically, first the ground lead pusher 91 makes contact with the angled surfaces 5a and 5b of the closed split funnel 24 and then after the split funnel 24 is opened, the separation of the funnel halves 25a and 25b allows the ground lead pusher 91 to continue moving downward, pushing the ground lead down into the space between the funnel halves 25a and 25b.) Lastly, the cable with installed sleeve is retracted onto the pallet 64 by the dual-belt cable feed mechanism 140 (step 244). In particular, the cable-sleeve assembly passes between the drive belts 86a and 86b (see FIG. 3) of the dual-belt cable feed mechanism 140.

FIG. 30 is a block diagram identifying some components of a computer-controlled pneumatic system for actuating various components of the sleeve installation machine 16 in accordance with one proposed implementation. The computer-controlled pneumatic system includes a multiplicity of control valves 75a-75i and a multiplicity of pneumatic actuators 76a-76i. The states of the control valves 75a-75i are controlled by the computer 162. In accordance with one proposed implementation, the computer 162a is a programmable logic controller (PLC), the control valves 75a-75i are solenoid valves, and the pneumatic actuators 76a-76i are double-acting pneumatic cylinders.

A PLC is an industrial computer control system that continuously monitors the states of input devices and makes decisions based upon a computer program designed to control the states of output devices. Each control valve is configured to control the flow of compressed gas from a compressed gas supply to an associated pneumatic actuator in response to an electrical signal representing a command received from the computer 162. Each pneumatic actuator comprises a pneumatic cylinder, a piston inside the cylinder, and a piston rod (connected to the piston) which projects forward and out of the pneumatic cylinder. The piston rod is linearly displaceable between a retracted position and an extended position in response to the supply of compressed gas to the pneumatic cylinder via the associated control valve, which compressed gas drives the piston movement.

In accordance with the proposed implementation depicted in FIG. 30, the computer 162 outputs electrical control signals representing state transition commands to change the states of the control valves 75a-75i, thereby causing the pneumatic actuators 76a-76i to extend or retract in accordance with a customized computer program designed to implement the methodology set forth in FIGS. 29A and 29B. The computer 162 sends either a release sleeve command or a grip sleeve command to control valve 75a to cause pneumatic actuator 76a to either open or close the sleeve gripper 18 respectively. The computer 162 sends either a release cable command or a center cable command to control valve 75b to cause the pneumatic actuator 76b to either open or close the cable centering gripper 20 respectively. The computer 162 sends either a clamp cable command or an unclamp cable command to control valve 75c to cause the pneumatic actuator 76c to either extend or retract the cable clamp 194 respectively. The computer 162 sends either an extend slug gripper command or a retract slug gripper cable command to control valve 75d to cause the pneumatic actuator 76d to either extend or retract the slug gripper 70 respectively. The computer 162 sends either a release cable command or a grip cable command to control valve 75e to cause the pneumatic actuator 76e to either open or close the slug gripper 70 respectively. The computer 162 sends either a move heating zone forward command or a move heating zone backward command to control valve 75f to cause the pneumatic actuator 76f to either move the heater shuttle 29 from the home position to the sleeve heating position or from the sleeve heating position to the home position respectively. The computer 162 sends either a push ground lead command or a withdraw ground lead pusher command to control valve 75g to cause the pneumatic actuator 76g to either extend or retract the ground lead pusher 91 respectively. The computer 162 sends either an open funnel command or a close funnel command to control valve 75h to cause the pneumatic actuator 76h to either open or close the split funnel 24. The computer 162 sends either an extend funnel assembly command or a retract funnel assembly command to control valve 75i to cause the pneumatic actuator 76i to either extend or retract the split funnel assembly 39.

For the purpose of opening and closing a gripper, either linear or rotary pneumatic actuators may be employed. In accordance with alternative embodiments, an electric actuator may be substituted for a pneumatic actuator. Suitable electric linear actuators comprise a rotary-to-linear motion conversion mechanism (e.g., a rack and pinion mechanism or a lead screw and nut mechanism) that converts rotary motion of an electric motor into linear displacement of a carriage. The electric motor is controlled by a motor controller, which in turn receives commands from the computer 162.

FIG. 31 is a block diagram identifying other computer-controlled components (not shown in FIG. 30) of the sleeve installation machine 16 depicted in FIG. 10. As previously described, the computer 162 sends either a feed cable command or a retract cable and sleeve command to the motor controller 164a to cause electric motor 72 to drive the dual-belt cable feed mechanism 140 to either feed the cable prior to sleeve installation or retract the cable and sleeve subsequent to sleeve installation respectively.

In addition, the computer 162 sends robot motor control commands to a robot controller 165 that cause the robot 17 to seat the sleeve on the first and second funnel extensions 1a and 1b (see FIG. 5B). More specifically, the robot controller 165 sends commands to a plurality of motor controllers 164b which control the operation of a plurality of robot motors 102.

In accordance with the proposed implementation depicted in FIG. 31, the computer 162 outputs an electrical control signal representing a heat sleeve command to a control valve 75j that supplies compressed gas from the compressed gas source 182 to a mini cooler 144 (for example, an EXAIR 3708 Mini Cooler commercially available from EXAIR LLC, Cincinnati, Ohio). The mini cooler 144 produces a stream of cold air and has no moving parts. For example, the mini cooler may include a vortex tube that separates compressed gas into hot and cold streams. The cold gas stream is directed through flexible tube 146 to an air nozzle 145, which is attached to the end of the tube. The air nozzle 145 is located to direct the cold gas stream onto the solder sleeve or dead end sleeve after the heating cycle has been completed.

In addition, the computer 162 outputs electrical control signals representing heat sleeve commands to the coil sides of a set of solid-state relays 124 to turn on the infrared emitters 55. The infrared emitters 55 are wired to a 115-V AC power source 125 through the contact sides of relays 124. In one proposed implementation, the infrared emitters 55 are quartz twin-tube infrared emitters with gold reflectors (for example, Golden 8 twin-tube infrared emitters commercially available from Heraeus Group headquartered in Hanau, Germany).

While systems, methods and apparatus for feeding shielded cable into cable processing equipment have been described with reference to various embodiments, it will be understood by those skilled in the art that various changes may be made and equivalents may be substituted for elements thereof without departing from the scope of the teachings herein. In addition, many modifications may be made to adapt the teachings herein to a particular situation without departing from the scope thereof. Therefore it is intended that the claims not be limited to the particular embodiments disclosed herein.

The embodiments disclosed above use one or more computers. As used in the claims, the term "computer" includes a single processing or computing device or multiple processing or computing devices that communicate via wireline or wireless connections. Such processing or computing devices typically include one or more of the following: a processor, a controller, a central processing unit, a microcontroller, a reduced instruction set computer processor, an application-specific integrated circuit, a programmable logic controller, a field-programmable gated array, a digital signal processor, and/or any other circuit or processing device capable of executing the functions described herein.

The methods described herein may be encoded as executable instructions embodied in a non-transitory tangible computer-readable storage medium, including, without limitation, a storage device and/or a memory device. Such instructions, when executed by a computer, cause the system device to perform at least a portion of the methods described herein.

In the method claims appended hereto, alphabetic ordering of steps is for the sole purpose of enabling subsequent short-hand references to antecedent steps and not for the purpose of limiting the scope of the claim to require that the method steps be performed in alphabetic order.

As used in the claims, the term "actuator" should be construed broadly to include pneumatic actuators, electric actuators, and structural equivalents thereof. As used in the claims, the phrase "output a command" should be construed to mean the output of an electrical signal representing a command and communication equivalents thereof (e.g., a radio signal).

Further embodiments:
E1. An apparatus (16) for placing a sleeve (12) on a cable (10), the apparatus comprising:
   a split funnel assembly (39) comprising:
   a first actuator (76h) comprising first and second guide carriages (180a, 180b) which translate from funnel open positions to funnel closed positions in response to a close funnel command; and
   a split funnel (24) comprising a first funnel half (25a) mounted to the first guide carriage and a second funnel half (25b) mounted to the second guide carriage, wherein the first funnel half comprises a first cable guide channel (69a) and a first funnel extension (1a) and the second funnel half comprises a second cable guide channel (69b) and a second funnel extension (1b), and wherein the split funnel is in a funnel closed state while the first and second guide carriages are in the funnel closed positions;
   a cable feeding mechanism (140) configured to feed the cable in response to a feed cable command, wherein the cable feeding mechanism is aligned to feed the cable between the first and second funnel halves while the split funnel is closed;
   a robot (17) comprising an end effector (23) and a plurality of robot motors (102), wherein the robot is configured to move the end effector in accordance with robot motor control commands;
   a sleeve gripper (18) mounted to the end effector, wherein the sleeve gripper is configured to grip the sleeve in response to a grip sleeve command; and
   a computer (162) configured to output the close funnel command, the grip sleeve command, robot motor control commands that seat the sleeve on the first and second funnel extensions while the split funnel is in the funnel closed state, and the feed cable command in accordance with a predetermined computer program,
   wherein while the split funnel is in the funnel closed state, the first and second funnel extensions form a seat for the sleeve and the first and second cable guide channels to form a repeatable path for the cable to follow through the funnel.
E2. The apparatus as recited in embodiment E1, wherein the first funnel extension comprises a first arc-shaped edge and the second funnel extension comprises a second arc-shaped edge, and wherein the first and second arc-shaped edges form a circular seat which fits inside one end of the sleeve while the split funnel is in the funnel closed state.
E3: The apparatus as recited in one of embodiments E1 - E2, wherein the first funnel half further comprises a first angled surface (5a), the second funnel half further comprises a second angled surface (5b), and the first and second angled surfaces form a groove while the split funnel is in the funnel closed state.
E4. The apparatus as recited in embodiment E3, wherein:
   the first funnel half further comprises a first ground lead clearance slot (11) above and adjacent the first funnel extension;
   the second funnel half further comprises a second ground lead clearance slot (11) above and adjacent the second funnel extension; and
   when the sleeve comprises a solder sleeve and a ground lead seated on the first and second funnel extensions in an "out back" configuration, the ground lead lies between the first and second ground lead clearance slots and rests in the groove formed by the first and second angled surfaces.
E5. The apparatus as recited in one of embodiment E1 - E4, further comprising:
   a cable centering gripper (20) which is configured to align the cable with the seat formed by the first and second funnel extensions while the split funnel is in the funnel closed state in response to a center cable command,
   wherein the computer is further configured to output the center cable command subsequent to outputting the feed cable command.
E6. The apparatus as recited in embodiment E5, further comprising a cable clamp assembly (68) comprising:
   a second actuator (76c) which is configured to change state in response to a clamp cable command;
   a cable clamp (194); and
   a lever (192) having one end coupled to the second actuator and another end coupled to the cable clamp, wherein the lever is configured so that the cable clamp is extended while the second actuator changes state,
   wherein the computer is further configured to output the clamp cable command subsequent to outputting the center cable command.
E7. The apparatus as recited in embodiment E6, further comprising a slug puller assembly (27) comprising:
   a third actuator (76d) which is configured to extend in response to an extend slug gripper command and to retract in response to a retract slug gripper command; and
   a slug gripper (70) which is configured to grip the jacket slug in response to a grip slug command while the third actuator is extended,
   wherein the computer is further configured to output the extend slug gripper command subsequent to outputting the clamp cable command, output the grip slug command subsequent to outputting the extend slug gripper command, and output the retract slug gripper command subsequent to outputting the grip slug command.
E8. A computer-implemented method for placing a sleeve on a cable, the method comprising automated operations performed by an automated workstation, wherein the automated operations comprise:
   closing a split funnel that comprises first and second funnel halves;
   picking up a sleeve using a sleeve gripper carried by a robot;
   placing an open end of the sleeve onto first and second funnel extensions projecting forward from the first and second funnel halves respectively of the closed split funnel;
   feeding an end of the cable through the split funnel and sleeve;
   removing a jacket slug from the end of the cable to expose shielding of the cable;
   retracting the cable until the exposed shielding is centered within the sleeve seated on the first and second funnel extensions;
   retracting the split funnel away from the cable centering gripper;
   releasing the sleeve from the sleeve gripper;
   moving the sleeve gripper away from the sleeve;
   activating heaters to heat the sleeve; and
   cooling the hot sleeve with cold air.
E9. The computer-implemented method as recited in embodiment E8, wherein said removing the jacket slug from the end of the cable comprises:
   centering the cable using a cable centering gripper;
   clamping the cable using a cable clamp;
   extending a slug gripper;
   gripping a jacket slug of the clamped cable using the slug gripper; and
   retracting the slug gripper to remove the jacket slug and expose shielding.
E10. The computer-implemented method as recited in embodiment E9, wherein the sleeve comprises a solder sleeve and a ground lead extending forward of the solder sleeve, the method further comprising:
   extending a ground lead pusher downward and into contact with the ground lead;
   opening the split funnel; and
   retracting the cable with solder sleeve onto a pallet.

## Claims

1. An apparatus (16) for installing a sleeve (12) on a cable (10), the apparatus comprising:
a split funnel assembly (39) comprising:
a first actuator (76h) comprising first and second guide carriages (180a, 180b) which translate from funnel open positions to funnel closed positions in response to a close funnel command and translate from funnel closed positions to funnel open positions in response to an open funnel command; and
a split funnel (24) comprising a first funnel half (25a) mounted to the first guide carriage and a second funnel half (25b) mounted to the second guide carriage, wherein the first funnel half comprises a first cable guide channel (69a) and a first funnel extension (1a) and the second funnel half comprises a second cable guide channel (69b) and a second funnel extension (1b), and wherein the split funnel is in a funnel closed state while the first and second guide carriages are in the funnel closed positions and in a funnel open state while the first and second guide carriages are in the funnel open positions;
a cable feeding mechanism (140) configured to feed the cable in response to a feed cable command and to retract the cable and sleeve in response to a retract cable and sleeve command, wherein the cable feeding mechanism is aligned to feed the cable between the first and second funnel halves while the split funnel is closed;
a robot (17) comprising an end effector (23) and a plurality of robot motors (102), wherein the robot is configured to move the end effector in accordance with robot motor control commands;
a sleeve gripper (18) mounted to the end effector, wherein the sleeve gripper is configured to grip the sleeve in response to a grip sleeve command and to release the sleeve in response to a release sleeve command;
a plurality of heaters (55a-55c) configured to heat the sleeve in response to a heat sleeve command while the sleeve is positioned in the heating zone; and
a computer (162) configured to output the close funnel command, the grip sleeve command, robot motor control commands that seat the sleeve on the first and second funnel extensions, the feed cable command, the release sleeve command, the heat sleeve command, the open funnel command, and the retract cable and sleeve command in accordance with a predetermined computer program,
wherein while the split funnel is in the funnel closed state, the first and second funnel extensions form a seat for the sleeve and the first and second cable guide channels to form a repeatable path for the cable to follow through the funnel.

2. The apparatus as recited in claim 1, wherein:
the plurality of heaters are movable from a home position to a sleeve heating position in response to a move heater forward command;
the sleeve is positioned in the heating zone while the sleeve is seated on the first and second funnel extensions and the plurality of heaters are in the sleeve heating position; and
the computer outputs the heat sleeve command while the sleeve is positioned in the heating zone.

3. The apparatus as recited in one of claims 1 - 2, wherein the first funnel extension comprises a first arc-shaped edge and the second funnel extension comprises a second arc-shaped edge, and wherein the first and second arc-shaped edges form a circular seat which fits inside one end of the sleeve while the split funnel is in the funnel closed state.

4. The apparatus as recited in one of claims 1 - 3, further comprising:
a second actuator (76i) comprising a third guide carriage (180c) which translates from a funnel assembly forward position to a funnel assembly retracted position in response to a retract funnel assembly command,
wherein the computer is further configured to output the retract funnel assembly command subsequent to outputting the feed cable command and prior to outputting the release sleeve command.

5. The apparatus as recited in claim 4, further comprising:
a cable centering gripper (20) which is configured to align the cable with the seat formed by the first and second funnel extensions while the split funnel is in the funnel closed state in response to a center cable command,
wherein the computer is further configured to output the center cable command subsequent to outputting the feed cable command.

6. The apparatus as recited in claim 5, further comprising a cable clamp assembly (68) comprising:
a third actuator (76c) which is configured to change to a cable clamped state in response to a clamp cable command;
a cable clamp (194); and
a lever (192) having one end coupled to the third actuator and another end coupled to the cable clamp, wherein the lever is configured so that the cable clamp is extended while the third actuator changes to the cable clamped state,
wherein the computer is further configured to output the clamp cable command subsequent to outputting the center cable command.

7. The apparatus as recited in claim 6, further comprising a slug puller assembly (27) comprising:
a fourth actuator (76d) which is configured to extend in response to an extend slug gripper command and to retract in response to a retract slug gripper command;
a fifth actuator (76e) comprising fourth and fifth guide carriages (180a, 180b) which translate from slug gripper open positions to slug gripper closed positions in response to a grip slug command; and
a slug gripper (70) comprising first and second slug gripper jaws 123a and 123b respectively mounted to the fourth and fifth guide carriages,
wherein the computer is further configured to output the extend slug gripper command subsequent to outputting the clamp cable command, output the grip slug command subsequent to outputting the extend slug gripper command, and output the retract slug gripper command subsequent to outputting the grip slug command.

8. The apparatus as recited in one of claims 1 - 7, wherein the first funnel half further comprises a first angled surface (5a), the second funnel half further comprises a second angled surface (5b), and the first and second angled surfaces form a groove while the split funnel is in the funnel closed state.

9. The apparatus as recited in claim 8, wherein:
the first funnel half further comprises a first ground lead clearance slot (11) above and adjacent the first funnel extension;
the second funnel half further comprises a second ground lead clearance slot (11) above and adjacent the second funnel extension; and
when the sleeve comprises a solder sleeve and a ground lead seated on the first and second funnel extensions in an "out back" configuration, the ground lead lies between the first and second ground lead clearance slots and rests in the groove formed by the first and second angled surfaces.

10. The apparatus as recited in claim 9, further comprising a ground lead management system (30) comprising:
a second actuator (76g) which is configured to extend in response to a push ground lead command; and
a ground lead pusher (91) which is configured to push a ground lead of the solder sleeve down while the second actuator is extending,
wherein the computer is further configured to output the push ground lead command subsequent to outputting the heat sleeve command and prior to outputting the open funnel command.

11. A computer-implemented method for installing a sleeve (12) on a cable (10), the method comprising automated operations performed by an automated workstation, wherein the automated operations comprise:
translating first and second guide carriages (180a, 180b) from funnel open positions to funnel closed positions in response to a close funnel command and translate from funnel closed positions to funnel open positions in response to an open funnel command; and
feeding, by a cable feeding mechanism, the cable in response to a feed cable command and retracting the cable and sleeve in response to a retract cable and
sleeve command, wherein the cable feeding mechanism is aligned to feed the cable between the first and second funnel halves while the split funnel is closed;
moving an end effector (23) of a robot (17) in accordance with robot motor control commands;
gripping the sleeve in response to a grip sleeve command and releasing the sleeve in response to a release sleeve command;
heating the sleeve in response to a heat sleeve command while the sleeve is positioned in a heating zone; and
outputting, by a computer (162), the close funnel command, the grip sleeve command, robot motor control commands that seat the sleeve on the first and second funnel extensions, the feed cable command, the release sleeve command, the heat sleeve command, the open funnel command, and the retract cable and sleeve command in accordance with a predetermined computer program,
wherein while the split funnel is in the funnel closed state, the first and second funnel extensions form a seat for the sleeve and the first and second cable guide channels form a repeatable path for the cable to follow through the funnel.

12. The computer-implemented method as recited in claim 11, further comprising:
positioning the sleeve in the heating zone while the sleeve is seated on the first and second funnel extensions and the plurality of heaters are in the sleeve heating position; and
outputting, by the computer (162), the heat sleeve command while the sleeve is positioned in the heating zone.

13. The computer-implemented method as recited in one of claims 11 - 12, further comprising:
translating a third guide carriage (180c) from a funnel assembly forward position to a funnel assembly retracted position in response to a retract funnel assembly command,
outputting, by the computer (162), the retract funnel assembly command subsequent to outputting the feed cable command and prior to outputting the release sleeve command.

14. The computer-implemented method as recited in claim 13, further comprising:
aligning the cable with the seat formed by the first and second funnel extensions while the split funnel is in the funnel closed state in response to a center cable command,
outputting, by the computer (162), the center cable command subsequent to outputting the feed cable command.

15. The computer-implemented method as recited in claim 14, further comprising:
changing to a cable clamped state in response to a clamp cable command;
outputting, by the computer (162), the clamp cable command subsequent to outputting the center cable command.
